# EUROPÄISCHE PATENTSCHRIFT

(11) **EP 3 084 733 B1**
(45) Veröffentlichungstag und Bekanntmachung des Hinweises auf die Patenterteilung: **11.12.2019**
(21) Anmeldenummer: 14820745.9
(22) Anmeldetag: 12.12.2014
(51) Int. Cl.: G07D 11/12, G07D 11/50, G07D 11/16, B65H 1/30, B65H 5/00, B65H 1/26, B65H 83/02, B65H 31/24, B65H 31/30

(54) **VERFAHREN UND VORRICHTUNG ZUM BEARBEITEN VON WERTDOKUMENTEN**
METHOD AND DEVICE FOR HANDLING OF VALUABLE DOCUMENTS
PROCÉDÉ ET DISPOSITIF DE TRAITEMENT DE DOCUMENTS DE VALEUR

(30) Priorität: 20.12.2013 DE 102013021976
(43) Veröffentlichungstag der Anmeldung: 26.10.2016
(73) Patentinhaber: Giesecke+Devrient Currency Technology GmbH, 81677 München (DE)
(72) Erfinder: BUNTSCHECK, Wilhelm, 82515 Wolfratshausen (DE); SPERL, Markus, 85748 Garching (DE)
(86) Internationale Anmeldenummer: PCT/EP2014/003338
(87) Internationale Veröffentlichungsnummer: WO 2015/090546

(56) Entgegenhaltungen:
- EP-A1- 0 871 149
- EP-A1- 1 833 029
- EP-A1- 2 120 219
- EP-A2- 1 195 725
- DE-A1-102009 034 065
- DE-A1-102009 042 891
- US-A- 4 465 192

## Beschreibung

Die vorliegende Erfindung betrifft ein Verfahren und eine Vorrichtung zum Bearbeiten von Wertdokumenten.

Aus der DE2760269 C2 ist eine Vorrichtung zum automatischen Sortieren von Wertdokumenten bekannt, die über ein Eingabefach zur Aufnahme der Wertdokumente, eine Vereinzelungseinrichtung, ein Transportsystem, eine entlang des Transportsystems angeordnete Prüfeinrichtung und mindestens eine Ablageeinrichtung verfügt. Die Wertdokumente werden entsprechend der Ergebnisse der Prüfeinrichtung sortiert, wobei unbestimmbare Reject-Wertdokumente in einem Zwischenspeicher abgelegt werden. Aus den Prüfergebnissen der Reject-Wertdokumente wird ein Protokoll wird über die Reject-Wertdokumente erstellt. Das Protokoll wird an einem Handnacharbeitsplatz dazu verwendet, die aus dem Zwischenspeicher entnommenen Reject-Wertdokumente von Hand auszuwerten und zu überprüfen. Das Ergebnis der manuellen Prüfung kann zur Vervollständigung der Sortierergebnisse verwendet werden. Die bekannte Vorrichtung weist jedoch den Nachteil auf, dass viele Reject-Wertdokumente einen großen Aufwand zur manuellen Nachbearbeitung am Handnachbearbeitungsplatz erfordern.

Zur Verringerung der manuellen Nacharbeit schlägt die DE10030221 A1 vor, die Anzahl an manuell nachzubearbeitenden Reject-Wertdokumenten dadurch zu reduzieren, dass die Überprüfung der Reject-Wertdokumente wiederholt wird. Dazu ist z.B. eine automatische Rückführung der Reject-Wertdokumente zum Eingabefach der Vorrichtung vorgesehen, aus dem die Reject-Wertdokumente erneut vereinzelt werden, um einer weiteren Überprüfung durch dieselbe Vorrichtung durchzuführen. Die Verringerung der Anzahl an Reject-Wertdokumenten ergibt sich, da vorliegende Störungen oder fehlerhafte Betriebsbedingungen, die zum Zeitpunkt einer ersten Überprüfung der Wertdokumente vorliegen, z. B. Schräglauf oder Doppelabzug der Wertdokumente, zum Zeitpunkt einer zweiten Überprüfung der Reject-Wertdokumente normalerweise nicht mehr auftreten. Die korrekte Überprüfung und Zuordnung der Reject-Wertdokumente ist somit in vielen Fällen bei der zweiten Überprüfung (auch als Rerun bezeichnet) möglich.

Ein weiteres Verfahren zur Verarbeitung von Wertdokumenten ist aus EP 1195725 A1 bekannt. Dabei werden ebenfalls die Reject-Wertdokumente erneut in das Eingabefach einer Wertdokumentenverarbeitungsvorrichtung eingegeben um diese erneut zu Prüfen. Zur Zuordnung der Reject-Wertdokumente zu ihren entsprechenden ursprünglichen Eingabestapeln werden diese durch Trennkarten getrennt.

Nachteilig ist dabei jedoch, dass, zur Trennung der Reject-Wertdokumente verschiedener Eingangsstapel bzw. Abrechnungseinheiten, Trennkarten benötigt werden, z.B. Headerkarten und/oder Trailerkarten, zwischen denen die Reject-Wertdokumente auf denselben Stapel abgelegt werden. Anhand der Informationen auf der jeweiligen Trennkarte werden die jeweiligen Reject-Wertdokumente, nach deren erneuter Prüfung, wieder dem ursprünglichen Eingangspäckchen zugeordnet, zu dem die Reject-Wertdokumente gehören, d.h. in dem diese ursprünglich enthalten waren. Die Verwendung von Trennkarten stellt jedoch einen zusätzlichen Aufwand dar. Außerdem gibt es bei der Verwendung von Trennkarten ein Risiko im Hinblick auf eine möglicherweise falsche Zuordnung von Reject-Wertdokumenten zu dem jeweiligen Eingangsstapel/ zu der jeweiligen Abrechnungseinheit, zu dem/der die Reject-Wertdokumente gehören, z.B. im Fall einer Transportstörung, bei der die Reihenfolge von Reject-Wertdokumenten und Trennkarten durcheinander geraten kann.

Wenn die Reject-Wertdokumente mehrerer Eingangspäckchen, durch Trennkarten getrennt, aufeinander gestapelt werden, ist es bei der Rückführung der Reject-Wertdokumente zum Eingabefach der Vorrichtung ferner erforderlich, den so gebildeten Stapel verschiedener Reject-Wertdokumente zu wenden, um diese - bei der erneuten Prüfung - wieder in der ursprünglichen Reihenfolge der Eingangspäckchen prüfen zu können. Durch das Wenden kann die richtige Zuordnung der erneut geprüften Reject-Wertdokumente zu dem richtigen Eingangspäckchen erreicht werden.

Ausgehend davon ist es eine Aufgabe der vorliegenden Erfindung, die Bearbeitung der Reject-Wertdokumente zu vereinfachen.

Diese Aufgabe wird durch die Merkmale der unabhängigen Ansprüche gelöst. Die abhängigen Ansprüche enthalten vorteilhafte Weiterbildungen der Erfindung.

Um einen oder mehrere Eingangsstapel von Wertdokumenten durch eine Wertdokumentbearbeitungsvorrichtung zu prüfen, werden diese manuell oder automatisch in ein Eingabefach der Wertdokumentbearbeitungsvorrichtung eingelegt. Anschließend werden die Wertdokumente aus dem Eingabefach durch eine Vereinzelungseinrichtung der Wertdokumentbearbeitungsvorrichtung vereinzelt, durch die Vorrichtung transportiert und dabei durch mindestens einen Sensor der Wertdokumentbearbeitungsvorrichtung geprüft, z.B. im Hinblick auf Echtheit, Art oder den Zustand der Wertdokumente. In Abhängigkeit von Ergebnissen des Prüfens werden die Wertdokumente in verschiedene Ablagefächer der Wertdokumentbearbeitungsvorrichtung sortiert. Bei diesem Sortieren werden Reject-Wertdokumente von den gültigen Wertdokumenten getrennt und in eine oder mehrere Reject-Ablage/n abgelegt. Als Reject-Wertdokumente werden solche Wertdokumente bezeichnet, die bei der automatischen Prüfung der Wertdokumente durch die Wertdokumentbearbeitungsvorrichtung zurückgewiesen und aussortiert werden, d.h. von den gültigen Wertdokumenten getrennt werden. Dazu kann es aufgrund von Transportfehlern kommen, die dazu führen können, dass das jeweilige Wertdokument bei der automatischen Prüfung nicht erkannt wird, oder aufgrund eines Fälschungsverdachts des jeweiligen Wertdokuments.

Anschließend werden diese Reject-Wertdokumente von der jeweiligen Reject-Ablage mit Hilfe einer Reject-Transporteinrichtung automatisch zu dem Eingabefach der Wertdokumentbearbeitungsvorrichtung zurücktransportiert. Die Reject-Wertdokumente der verschiedenen Eingangsstapel werden dabei voneinander getrennt in verschiedene Reject-Transporteinheiten (RT) abgelegt und in den verschiedenen Reject-Transporteinheiten zu dem Eingabefach der Wertdokumentbearbeitungsvorrichtung zurücktransportiert. Anschließend werden, für jede Reject-Transporteinheit individuell, die Reject-Wertdokumente der jeweiligen Reject-Transporteinheit automatisch (erneut) in das Eingabefach eingelegt, um die Reject-Wertdokumente erneut durch dieselbe Wertdokumentbearbeitungsvorrichtung zu prüfen (Rerun). Die jeweiligen Reject-Wertdokumente werden dann erneut aus dem Eingabefach vereinzelt, geprüft, transportiert und abgelegt. Durch das erneute Prüfen können solche Reject-Wertdokumente, die bei der erneuten Prüfung nicht mehr als Reject klassifiziert werden, als gültige Wertdokumente akzeptiert werden. So kann die Anzahl der Reject-Wertdokumente reduziert werden.

Die erfindungsgemäße Reject-Transporteinrichtung weist mehrere Reject-Transporteinheiten auf, in die die Reject-Wertdokumente der verschiedenen Eingangsstapel voneinander getrennt abgelegt werden, um diese getrennt voneinander zu dem Eingabefach der Wertdokumentbearbeitungsvorrichtung zurück zu transportieren. Die Reject-Transporteinheiten weisen jeweils eine individuelle maschinenlesbare Kennung auf, z.B. einen Barcode oder reflektierende oder mechanische Kodierungselemente oder einen Datenträger, z.B. einen NFC-Chip. Zum Beispiel sind die Reject-Transporteinheiten als Transportbehälter ausgebildet, die an ihrer Oberseite offen sind.

Die Reject-Transporteinrichtung weist einen Leser zum Einlesen der maschinenlesbaren Kennung der jeweiligen Reject-Transporteinheit auf. Die durch den Leser eingelesene maschinenlesbare Kennung der jeweiligen Reject-Transporteinheit wird dazu verwendet, die Reject-Wertdokumente der jeweiligen Reject-Transporteinheit dem Eingangsstapel zuzuordnen, zu dem diese Reject-Wertdokumente gehören, d.h. dem Eingangsstapel zuzuordnen, in dem die Reject Wertdokumente ursprünglich zu der Wertdokumentbearbeitungsvorrichtung zugeführt wurden (in dem diese beim erstmaligen Einlegen in die Wertdokumentbearbeitungsvorrichtung vorhanden waren). Dieser Eingangsstapel bildet z.B. eine Abrechnungseinheit der Wertdokumente. Der Eingangsstapel bzw. die Abrechnungseinheit kann auch aus mehreren Teilstapeln bestehen, die der Wertdokumentbearbeitungsvorrichtung nacheinander zugeführt werden.

Der Leser kann so an (z.B. unter) der Reject-Transporteinrichtung angeordnet sein, dass die Reject-Transporteinheiten, beim automatischen Zurücktransportieren der Reject-Wertdokumente zum Eingabefach, an dem Leser vorbeitransportiert werden und der Leser die maschinenlesbare Kennung während des Vorbeitransportierens (kontaktlos) auslesen kann. Der Leser ist bevorzugt so an/auf der Reject-Transporteinrichtung angeordnet, dass er die maschinenlesbare Kennung der jeweiligen Reject-Transporteinheit auslesen kann, während diese in der Reject-Ablage mit Reject-Wertdokumenten beladen wird. Zusätzlich oder alternativ dazu kann auch ein weiterer Leser verwendet werden, der so angeordnet ist, dass er die maschinenlesbare Kennung der jeweiligen Reject-Transporteinheit unmittelbar vor dem Wiedereinlegen der Reject-Wertdokumente in das Eingabefach auslesen kann. Je nach Art der maschinenlesbaren Kennung ist der Leser z.B. ein Barcodeleser, ein NFC-fähiger Leser, ...

Die erfindungsgemäße Wertdokumentbearbeitungsvorrichtung umfasst:
a) ein Eingabefach zur Aufnahme eines oder mehrerer Eingangsstapel von Wertdokumenten, die in das Eingabefach eingelegt werden,
b) eine Vereinzelungseinrichtung zum Vereinzeln der Wertdokumente aus dem Eingabefach,
c) mindestens einen Sensor zum Prüfen der Wertdokumente,
d) ein Transportsystem zum Transportieren der Wertdokumente in Abhängigkeit von Ergebnissen der Prüfung und zum Sortieren der Wertdokumente in verschiedene Ablagefächer der Wertdokumentbearbeitungsvorrichtung,
e) eine Reject-Transporteinrichtung zum automatischen Zurücktransportieren von Reject-Wertdokumenten von der Reject-Ablage zu dem Eingabefach, die mehrere Reject-Transporteinheiten aufweist, die jeweils eine individuelle maschinenlesbare Kennung aufweisen, und einen Leser zum Einlesen der maschinenlesbaren Kennung der Reject-Transporteinheiten,
f) eine Steuerungseinrichtung, die die Vorrichtung so steuert,
   - dass die Reject-Wertdokumente von den gültigen Wertdokumenten getrennt in eine Reject-Ablage abgelegt werden,
   - dass die Reject-Wertdokumente von der Reject-Ablage zum Eingabefach zurücktransportiert und erneut in das Eingabefach eingelegt werden,
   - die in das Eingabefach erneut eingelegten Reject-Wertdokumente erneut durch die Vorrichtung geprüft werden, damit Reject-Wertdokumente, die bei der erneuten Prüfung nicht mehr als Reject klassifiziert werden, als gültige Wertdokumente akzeptiert werden können. Die Steuerungseinrichtung steuert die Reject-Transporteinrichtung so, dass die Reject-Wertdokumente der verschiedenen Eingangsstapel voneinander getrennt in verschiedene Reject-Transporteinheiten abgelegt werden, und in den verschiedenen Reject-Transporteinheiten zu dem Eingabefach der Wertdokumentbearbeitungsvorrichtung zurücktransportiert werden,
g) eine Auswerteeinrichtung, die die durch den Leser eingelesene maschinenlesbare Kennung der jeweiligen Reject-Transporteinheit dazu verwendet, die Reject-Wertdokumente aus der jeweiligen Reject-Transporteinheit dem Eingangsstapel zuzuordnen, zu dem diese Reject-Wertdokumente gehören. Die Auswerteeinrichtung kann von der Steuereinrichtung der Vorrichtung getrennt ausgebildet sein oder in dieser integriert sein.

Die Auswerteeinrichtung ist z.B. dazu ausgebildet, die Ergebnisse der erneuten Prüfung (Rerun) der Reject-Wertdokumente, die bei der erneuten Prüfung nicht mehr als Reject, sondern als gültige Wertdokumente klassifiziert wurden, mit den Ergebnissen der (erstmaligen) Prüfung des Eingangsstapels, zu dem die jeweiligen Reject-Wertdokumente gehören, zusammen zu führen. Die Prüfungsergebnisse der erneuten Prüfung (Rerun) werden, anhand der von dem Leser eingelesenen individuellen maschinenlesbaren Kennung der Reject-Transporteinheit, den Prüfungsergebnissen der erstmaligen Prüfung des jeweiligen Eingangsstapels zugeordnet.

Durch die Erfindung wird erreicht, dass das erneute Prüfen der Reject-Wertdokumente und die richtige Zuordnung der Reject-Wertdokumente zu ihrem ursprünglichen Eingangsstapel vollautomatisch durchgeführt werden kann, ohne Eingreifen eines Bedieners. Außerdem ist es nicht mehr notwendig, dass das erneute Prüfen unmittelbar nach dem erstmaligen Prüfen der Wertdokumente durchgeführt werden muss. Die Erfindung ermöglich dagegen, dass das erneute Prüfen (Rerun) zeitlich flexibel erfolgen kann.

Jeweils eine der Reject-Transporteinheiten wird mit Hilfe der Reject-Transporteinrichtung temporär so in der Reject-Ablage der Wertdokumentbearbeitungsvorrichtung positioniert, dass die Reject-Wertdokumente vorzugsweise direkt (d.h. ohne vorheriges Stapeln) aus der Wertdokumentbearbeitungsvorrichtung in die Reject-Transporteinheit abgelegt, insbesondere gestapelt werden können.

Die Reject-Wertdokumente der zum Eingabefach zurücktransportierten Reject-Transporteinheiten werden automatisch in das Eingabefach wiedereingelegt und die jeweilige Reject-Transporteinheit dadurch ausgeleert. Die ausgeleerte Reject-Transporteinheit wird mit Hilfe der Reject-Transporteinrichtung zu einer (zu derselben oder einer anderen) Reject-Ablage zurücktransportiert und dort zur Aufnahme von Reject-Wertdokumenten eines weiteren Eingangsstapels bereitgestellt. Dort wird sie zur Aufnahme von Reject-Wertdokumenten verwendet, die im Allgemeinen zu einem anderen Eingangsstapel gehören als die gerade zuvor aus der Reject-Transporteinheit entnommenen Reject-Wertdokumente.

Bevorzugt werden die Reject-Wertdokumente der zum Eingabefach zurücktranspörtierten Reject-Transporteinheiten jeweils derart zwischen zwei Eingangsstapel in das Eingabefach wiedereingelegt, dass jeweils unmittelbar vor und unmittelbar nach dem Prüfen der Reject-Wertdokumente der jeweiligen Transporteinheit, ein Eingangsstapel durch die Wertdokumentbearbeitungsvorrichtung geprüft wird, aber die Reject-Wertdokumente zweier verschiedener Reject-Transporteinheiten nicht unmittelbar nacheinander geprüft werden. Es werden also bevorzugt keine zwei Reject-Stapel unmittelbar aufeinanderfolgend durch die Wertdokumentbearbeitungsvorrichtung bearbeitet. Durch die abwechselnde Bearbeitung mit Eingangsstapeln lässt sich ein höherer Durchsatz der Wertdokumentbearbeitung erreichen, da die Reject-Wertdokumente einer Transporteinheit (die viel weniger Wertdokumente umfassen als die Eingangsstapel) üblicherweise schon fertig bearbeitet sind, bevor noch die Reject-Wertdokumente der nächsten Transporteinheit in das Eingabefach eingelegt werden können. Die dadurch entstehende Wartezeit kann vermieden werden, wenn dazwischen die länger dauernde Bearbeitung der Eingangsstapel erfolgt.

Beim erneuten Prüfen der Reject-Wertdokumente kann eine modifizierte Echtheitsprüfung der Reject-Wertdokumente durchgeführt werden, bei der die Reject-Wertdokumente weniger streng auf ihre Echtheit geprüft werden als beim erstmaligen Prüfen des Eingangsstapels, indem die jeweiligen Reject-Wertdokumente ursprünglich vorhanden waren. Dadurch wird die Anzahl der Reject-Wertdokumente, die aufgrund von Transportfehlern als Reject bewertet werden, reduziert. Bevorzugt wird eine weniger strenge Echtheitsprüfung beim erneuten Prüfen nur bei den nicht-erkannten Wertdokumenten durchgeführt, die beim Sortieren von den fälschungsverdächtigen Wertdokumenten getrennt wurden, wobei die nicht-erkannten Wertdokumente zum Eingabefach zurücktransportiert und die fälschungsverdächtigen Wertdokumente in einen Zwischenspeicher transportiert wurden. Da beim ersten Prüfen weiterhin streng geprüft wird, werden dann fälschungsverdächtige Wertdokumente trotzdem zuverlässig gefunden und aussortiert.

In einem Ausführungsbeispiel ist im Eingabefach ein oder mehrere Rechen vorgesehen, der die Reject-Wertdokumente aus der jeweiligen Reject-Transporteinheit heraushebt und bis zur Vereinzelungseinrichtung anhebt, damit die Reject-Wertdokumente dort erneut vereinzelt werden. Der jeweilige Rechen ist derart entlang der Stapelrichtung der Wertdokumente in dem Eingabefach bewegbar, dass er sowohl die Reject-Wertdokumente aus der Reject-Transporteinheit als auch die in das Eingabefach eingelegten Eingangsstapel bis zur Vereinzelungseinrichtung anheben kann. Der jeweilige Rechen kann auch entlang zweier Richtungen bewegbar sein, erstens parallel zur Stapelrichtung der Wertdokumente im Eingabefach und zweitens senkrecht dazu, entlang der Finger des Rechens. Der mindestens eine Rechen dient als Trennelement, der die in das Eingabefach eingelegten Wertdokumentstapel voneinander trennt. Die Vorrichtung erkennt das Ende des jeweiligen Wertdokumentstapels (Eingangsstapels oder Reject-Stapels) daran, dass alle auf dem jeweiligen Rechen liegenden Wertdokumente vereinzelt wurden. Auf Headerkarten und Trailerkarten kann daher verzichtet werden.

Die Reject-Transporteinheiten weisen z.B. jeweils einen mäanderförmigen Boden auf, auf dem die Reject-Wertdokumente liegen, wobei der mäanderförmige Boden längliche horizontale Aussparungen (horizontal heißt parallel zur Oberfläche der Reject-Wertdokumente) aufweist. Diese Aussparungen können als Vertiefungen oder durchgehende Löcher ausgebildet sein. Der Boden ist an seiner Oberseite derart mäanderförmig ausgebildet, dass der Rechen des Eingabefachs (horizontal) in den mäanderförmigen Boden und dabei unter die Reject-Wertdokumente eintauchen kann. Die Finger des Rechens kämmen dabei mit den Aussparungen des mäanderförmigen Bodens, um die auf dem Boden liegenden Reject-Wertdokumente vom Boden weg nach oben anzuheben und dadurch aus der Reject-Transporteinheit herauszuheben.

Zum erneuten Einlegen der Reject-Wertdokumente in das Eingabefach, wird jeweils eine der Reject-Transporteinheiten derart in das Eingabefach hineingefahren, dass der Rechen des Eingabefachs in die Aussparungen des mäanderförmigen Bodens eintaucht, um die Reject-Wertdokumente aus der jeweiligen Reject-Transporteinheit herauszuheben und bis zur Vereinzelungseinrichtung anzuheben. Falls die Aussparungen als durchgehende Löcher vorliegen, kann die Reject-Transporteinheit (ohne den in den Ausführungsbeispielen genannten Schlitten) automatisch in das Eingabefach hineingeschoben werden und der entlang der Stapelrichtung bewegte Rechen von unten durch den Boden der Reject-Transporteinheit hindurchtauchen, um die Reject-Wertdokumente anzuheben. Alternativ wird auch der (in den Ausführungsbeispielen genannte) Schlitten mit in das Eingabefach hineinbewegt, sofern dieser ebenfalls entsprechende Aussparungen für den Rechen aufweist. Alternativ dazu kann zuerst die Reject-Transporteinheit auf dem Schlitten in das Eingabefach gefahren und dann ein (entlang zweier Richtungen bewegbarer) Rechen in der Richtung senkrecht zur Stapelrichtung der Wertdokumente bewegt werden, um lateral (entlang der Richtung seiner Finger) in den Boden der Reject-Transporteinheit einzutauchen. Alternativ kann das Eintauchen auch mit einem Rechen erreicht werden, der nur entlang der Stapelrichtung und nicht senkrecht dazu bewegbar ist. Dazu wird, noch bevor die Reject-Transporteinheit mit dem Schlitten in das Eingabefach gefahren wird, der Rechen bereits in die richtige Höhe bewegt, in der die Aussparungen des Bodens der Reject-Transporteinheit eintreffen wird. Beim anschließenden Hineinfahren der Reject-Transporteinheit in das Eingabefach taucht der (stillstehende) Rechen dann in den Boden der (einfahrenden) Reject-Transporteinheit ein.

Alternativ kann zum erneuten Einlegen der zurücktransportierten Reject-Wertdokumente in das Eingabefach ein Greifer verwendet werden, der die Reject-Wertdokumente aus der jeweiligen Reject-Transporteinheit entnimmt und zwischen zwei Eingangsstapel in das Eingabefach einlegt.

Alternativ dazu kann das Wiedereinlegen auch dadurch erreicht werden, dass die Reject-Wertdokumente, z.B. mit Hilfe eines Schiebers, aus ihrer Reject-Transporteinheit in das Eingabefach hineingeschoben werden. Dazu wird ein Rechen oder eine vertikal verfahrbare Ablageplatte des Eingabefachs in dieselbe Höhe gefahren, in der sich auch der Boden der Reject-Transporteinheit befindet, und dann werden die Reject-Wertdokumente horizontal von dem Boden der Reject-Transporteinheit auf den Rechen/ die Ablageplatte des Eingabefachs hinübergeschoben.

Bevorzugt weist die Reject-Transporteinrichtung zwei Transportpfade auf, die derart getrennt voneinander ausgebildet sind, dass sie einen geschlossenen Umlauf der Reject-Transporteinheiten von der Reject-Ablage bis zu dem Eingabefach und wieder zurück ermöglichen. Die leeren Reject-Transporteinheiten werden entlang eines ersten Transportpfads aus dem Bereich des Eingabefachs in den Bereich der Reject-Ablage hintransportiert und, nachdem die Reject-Wertdokumente in der Reject-Ablage in die jeweilige Reject-Transporteinheit abgelegt wurden, entlang eines zweiten Transportpfads aus dem Bereich der Reject-Ablage in den Bereich des Eingabefachs zurücktransportiert. Der erste und zweite Transportpfad der Reject-Transporteinrichtung sind derart unabhängig voneinander bewegbar, dass für das Hintransportieren der leeren Reject-Transporteinheiten entlang des ersten Transportpfads (von dem Eingabefach zu der Reject-Ablage) ein anderer Zeitpunkt gewählt werden kann als für das Zurücktransportieren der beladenen Reject-Transporteinheiten entlang des zweiten Transportpfads (von der Reject-Ablage zu dem Eingabefach). Der erste und zweite Transportpfad können gerade verlaufen, aber auch eine oder mehrere Umlenkung/en oder Kurve/n aufweisen. Der erste Transportpfad wird z.B. durch eine erste Transporteinrichtung gebildet, der zweite Transportpfad durch eine zweite Transporteinrichtung. Zum Beispiel können die erste und zweite Transporteinrichtung eines oder mehrere Transportbänder und/oder Transportrollen aufweisen.

Bevorzugt bilden der erste und zweite Transportpfad jeweils einen Pufferspeicher für mehrere Reject-Transporteinheiten, der jeweils Reject-Transporteinheiten bis zu einer maximalen Anzahl aufnehmen kann. Der erste Transportpfad bildet einen Pufferspeicher für die leeren Reject-Transporteinheiten und der zweite Transportpfad für die mit Reject-Wertdokumenten beladenen Reject-Transporteinheiten. Beispielsweise ist jeweils am Ende des ersten/ zweiten Transportpfads ein Stoppmechanismus vorhanden, mit dem die (leeren/beladenen) Reject-Transporteinheiten am Ende des ersten/ zweiten Transportpfads mechanisch angehalten werden können. Während die Reject-Transporteinheiten am Ende des ersten/ zweiten Transportpfads mechanisch angehalten sind, können gleichzeitig am Beginn des ersten/zweiten Transportpfad weitere (leere/beladene) Reject-Transporteinheiten zugeführt und entlang des ersten/ zweiten Transportpfads transportiert werden, bis sie am Ende des ersten/ zweiten Transportpfad auf die am Ende des ersten/ zweiten Transportpfads auf die (mit Hilfe des Stoppmechanismus angehaltene) Reject-Transporteinheit auflaufen. Dadurch können leere/beladene Reject-Transporteinheiten am Ende des ersten/ zweiten Transportpfads gesammelt werden. Durch Aktivieren und Deaktivieren des Stoppmechanismus, der sich am Ende des ersten Transportpfads befindet, wird gesteuert, wann die nächste leere Reject-Transporteinheit zu der Reject-Ablage transportiert wird. Durch Aktivieren und Deaktivieren des Stoppmechanismus, der sich am Ende des zweiten Transportpfads befindet, wird gesteuert, wann die nächste mit Reject-Wertdokumenten beladene Reject-Transporteinheit zum Eingabefach transportiert wird.

In den Ausführungsbeispielen liegen der erste und zweite Transportpfad auf einer Ebene, aus Sicht des Bedieners der Vorrichtung quasi hintereinander. Die Erfindung ist jedoch nicht darauf beschränkt. Denn es ist genauso möglich, den ersten und zweiten Transportpfad untereinander anzuordnen, z.B. um Platz nach vorne zu sparen. Die Reject-Transporteinheiten müssten dann jedoch auch vertikal transportiert werden, um vom ersten zum zweiten Transportpfad und zurück zu gelangen.

Die Steuereinrichtung der Wertdokumentbearbeitungsvorrichtung veranlasst das Wiedereinlegen der Reject-Wertdokumente in das Eingabefach vorzugsweise spätestens dann, wenn der zweite Transportpfad keine weiteren (mit Reject-Wertdokumenten beladen) Reject-Transporteinheiten mehr aufnehmen kann, und spätestens dann, wenn in der Reject- Transporteinrichtung keine leere Reject-Transporteinheit mehr zur Aufnahme von Reject-Wertdokumenten eines weiteren Eingangsstapels vorhanden ist, je nachdem welches Ereignis früher eintritt. Um ein Anhalten der Wertdokumentbearbeitung zu vermeiden, sollte das Wiedereinlegen der Reject-Wertdokumente in das Eingabefach so frühzeitig erfolgen, dass immer mindestens eine andere (leere) Reject-Transporteinheit zur Aufnahme von Reject-Wertdokumenten des gerade bearbeiteten Eingangsstapels zur Verfügung steht. Das Wiedereinlegen wird z.B. an oder zwischen den folgenden beiden Zeitpunkten durchgeführt:
1) Für das Wiedereinlegen der Reject-Wertdokumente in das Eingabefach ist der frühestmögliche Zeitpunkt dann, sobald die erste mit Reject-Wertdokumenten beladene Reject-Transporteinheit am Eingabefach ankommt. Sobald dies erfolgt ist, können deren Reject-Wertdokumente bei nächster Gelegenheit zwischen zwei Eingangsstapel eingelegt und bearbeitet werden.
2) Der spätestmögliche Zeitpunkt für das Wiedereinlegen der Reject-Wertdokumente in das Eingabefach ist dann, wenn alle Reject-Transporteinheiten der Reject-Transporteinrichtung mit Reject-Wertdokumenten beladen sind. Spätestens sobald dies der Fall ist, wird veranlasst, dass der aktuelle Eingangsstapel, dessen Wertdokumente zu diesem Zeitpunkt gerade vereinzelt werden, fertig bearbeitet wird, und die Reject-Wertdokumente zumindest einer der zum Eingabefach zurücktransportierten Reject-Transporteinheiten automatisch an einer solchen Position in das Eingabefach eingelegt werden, dass diese unmittelbar nach dem aktuellen Eingangsstapel bearbeitet werden, wobei die betreffende Reject-Transporteinheit dadurch ausgeleert wird. Da für das Transportieren dieser (gerade ausgeleerten) Reject-Transporteinheit von dem Eingabefach zu der Reject-Ablage eine gewisse Zeit benötigt wird und in dieser Zeit keine Reject-Transporteinheit zur Ablage von Reject-Wertdokumenten zur Verfügung stehen würde, ist es bevorzugt, dass nicht bis zum spätestmöglichen Zeitpunkt gewartet wird, sondern das Wiedereinlegen bereits früher erfolgt.

Bevorzugt wird das Wiedereinlegen der Reject-Wertdokumente in das Eingabefach spätestens dann veranlasst, wenn nur noch eine einzige leere Reject-Transporteinheit in der Reject-Transporteinrichtung vorhanden ist (d.h. zu diesem Zeitpunkt oder früher). Die Anzahl, wie viele leere Reject-Transporteinheiten zur Verfügung stehen, kann z.B. anhand der eingelesenen maschinenlesbaren Kennungen oder mittels einer Kamera und entsprechender Bildverarbeitung festgestellt werden. Das Wiedereinlegen der Reject-Wertdokumente in das Eingabefach kann z.B. dann veranlasst werden, wenn eine bestimmte Mindestanzahl an Reject-Transporteinheiten mit Wertdokumenten beladen ist, z.B. wenn fast alle beladen sind und nur noch wenige oder eine einzige leere Reject-Transporteinheit vorhanden ist.

Nach der Bearbeitung eines Eingangsstapel, bevor der nächste Eingangsstapel durch die Wertdokumentbearbeitungsvorrichtung bearbeitet wird, wird ein Wechsel der Reject-Transporteinheiten durchgeführt. Dazu wird die Reject-Transporteinrichtung so bewegt, dass diejenige Reject-Transporteinheit, in der die Reject-Wertdokumente des gerade fertig bearbeiteten Eingangsstapels gestapelt wurden, aus der Reject-Ablage herausbewegt wird, und anschließend eine leere Reject-Transporteinheit in die Reject-Ablage hineinbewegt wird und dort zur Aufnahme der Reject-Wertdokumente des nächsten oder eines der nächsten Eingangsstapel bereitgestellt wird.

Falls nur eine Reject-Ablage zur Aufnahme der Reject-Transporteinheiten zur Verfügung steht, wird mit dem Vereinzeln eines weiteren Eingangsstapels so lange gewartet, bis in dieser Reject-Ablage wieder eine Reject-Transporteinheit zur Aufnahme von Reject-Wertdokumenten des weiteren Eingangsstapels bereitgestellt ist.

Falls mehr als eine Reject-Ablage zur Verfügung steht, kann die nächste (leere) Reject-Transporteinheit bereits in (eine andere Reject-Ablage) hineinbewegt werden, bevor die zuvor beladene Reject-Transporteinheit aus ihrer Reject-Ablage herausbewegt wird. Die Wertdokumentbearbeitungsvorrichtung weist z.B. zwei (gleichberechtigte) Reject-Ablagen auf, die abwechselnd zum Ablegen von Reject-Wertdokumenten verwendet werden. Aufeinander folgend in das Eingabefach eingelegte Wertdokumentstapel (Eingangsstapel oder Reject-Stapel), z.B. verschiedene aufeinander folgende Eingangsstapel verschiedener Abrechnungseinheiten, werden abwechselnd entweder in die eine oder in die andere Reject-Ablage abgelegt. Die Reject-Transporteinrichtung wird so gesteuert, dass zu jedem Zeitpunkt der Wertdokumentbearbeitung zumindest an einer der Reject-Ablagen eine Reject-Transporteinheit zur Ablage von Reject-Wertdokumenten zur Verfügung steht. Damit wird erreicht, dass auch in der Zeit, während eine mit Reject-Wertdokumenten beladene Reject-Transporteinheit aus einer der Reject-Ablagen heraustransportiert wird und bevor erneut eine leere Reject-Transporteinheit in diese Reject-Ablage hineintransportiert wird, in einer anderen Reject-Ablage eine Reject-Transporteinheit zur Ablage von Reject-Wertdokumenten zur Verfügung steht. Die Wertdokumentbearbeitung braucht dann nicht unterbrochen zu werden. In diesem Fall braucht mit dem Vereinzeln des nächsten Eingangsstapels nicht gewartet zu werden, bis in derselben Reject-Ablage die Reject-Transporteinheit gewechselt wurde. Da in der anderer Reject-Ablage bereits eine leere Reject-Transporteinheit zur Ablage von Reject-Wertdokumenten bereit gestellt wurde, kann mit dem Vereinzeln des nächsten Wertdokumentstapels im Eingabefach daher ohne Wartezeit begonnen werden.

Die Erfindung wird nachfolgend anhand von Figuren näher erläutert. Es zeigen:
Fig. 1a eine Wertdokumentbearbeitungsvorrichtung,
Fig. 1b ein Beispiel für eine Reject-Transporteinheit,
Fig. 2 ein erstes Ausführungsbeispiel für eine Reject-Transporteinrichtung mit nur einer Reject-Ablage,
Fig. 3a-c automatisches Entnehmen der Reject-Wertdokumente aus der Reject-Transporteinheit,
Fig. 4 ein Eingabefach einer erfindungsgemäßen Vorrichtung,
Fig. 5 ein zweites Ausführungsbeispiel für eine Reject-Transporteinrichtung mit zwei Reject-Ablagen,
Fig. 6 ein drittes Ausführungsbeispiel für eine Reject-Transporteinrichtung mit drei Reject-Ablagen,
Fig. 7a-j ein viertes Ausführungsbeispiel für eine Reject-Transporteinrichtung mit zwei Reject-Ablagen,
Fig. 8a-c einen Hebemechanismus für die Reject-Transporteinheiten in der Reject-Ablage.

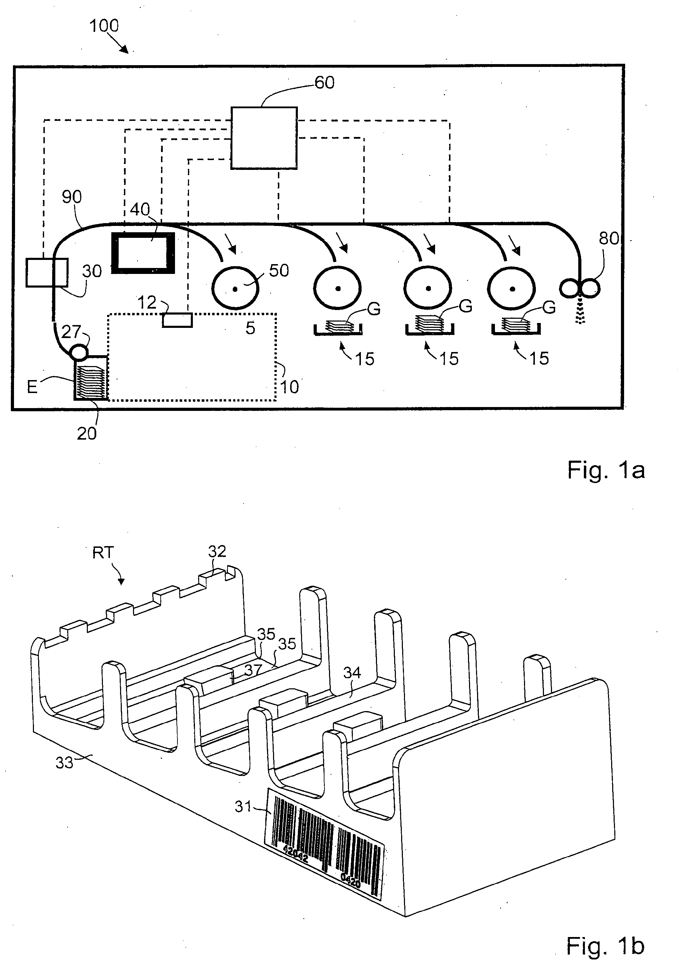

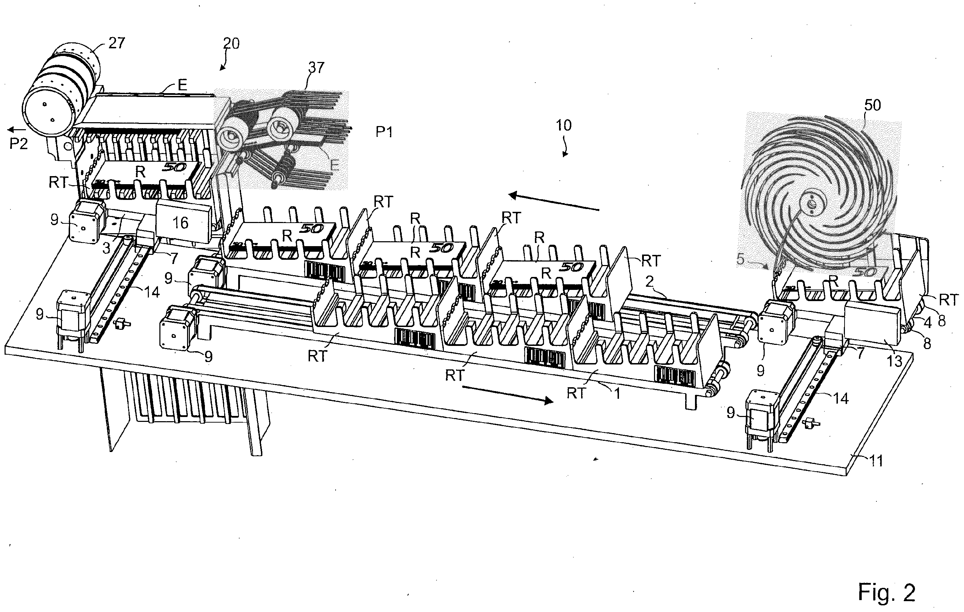

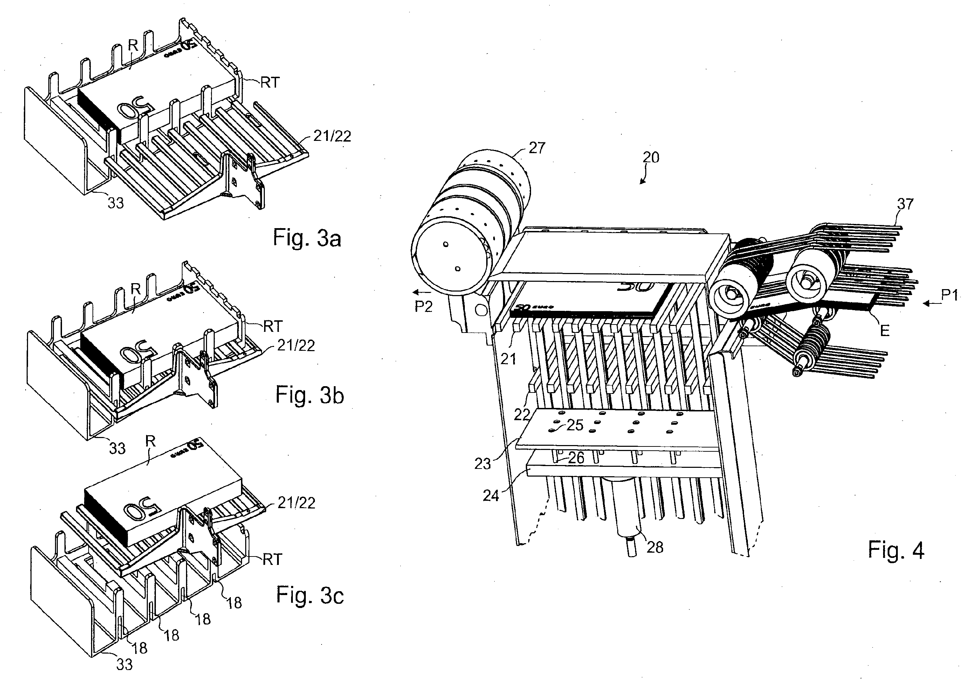

Figur 1a zeigt eine Wertdokumentbearbeitungsvorrichtung 100, die eine erfindungsgemäße Reject-Transporteinrichtung 10 aufweist (Beispiele dazu in Fig. 2, 5, 6, 7 dargestellt). In das Eingabefach 20 wurden (automatisch oder manuell) einer oder mehrere Eingangsstapel E von Wertdokumenten eingelegt, die durch die Vorrichtung 100 bearbeitet werden sollen. Am oberen Ende des Eingabefachs 20 ist eine Vereinzelungseinrichtung 27, mit der jeweils das oberste Wertdokument im Eingabefach (entlang des Pfeils P2, vgl. Fig. 4) vereinzelt wird. Die Vorrichtung 100 weist ein Transportsystem 90 auf, welches die Wertdokumente, die aus dem Eingabefach 20 heraus vereinzelt werden, an einem oder mehreren Sensoren 30 vorbeitransportiert und diese entsprechend den Prüfergebnissen der Sensoren 30 sortiert. Die geprüften Wertdokumente werden zum Sortieren in eines oder mehrere Ablagefächer 15 für gültige Wertdokumente G abgelegt oder, sofern sich bei der Prüfung des jeweiligen Wertdokuments eine Reject-Ursache ergibt, in die Reject-Ablage 5. Gegebenenfalls können solche Wertdokumente, die einen schlechten Zustand haben, durch einen Schredder 80 vernichtet werden. Die Vorrichtung 100 kann über eine Bedienerschnittstelle 40 bedient werden. Die Steuerung 60 der Vorrichtung 100 ist mit einer Transportsteuerung 12 der Reject-Transporteinrichtung 10 durch eine Kommunikationsleitung verbunden, über die der Betrieb der Reject-Transporteinrichtung 10 im Hinblick auf die Bearbeitung der Wertdokumente in der Vorrichtung 100 abgestimmt wird, z.B. betreffend das Timing des Transportierens der Reject-Transporteinheiten aus der Reject-Ablage in Abhängigkeit davon, wann ein Eingangsstapel E fertig bearbeitet und sortiert wurde oder auch betreffend das Hineintransportieren der nächsten Reject-Transporteinheit in das Eingabefach 20 in Abhängigkeit des Fortschritts der Bearbeitung der Eingangsstapel E durch die Vorrichtung 100. Die Aufgaben der Transportsteuerung 12 können alternativ auch von der Steuereinrichtung 60 selbst übernommen werden.

In Fig. 1b ist ein Beispiel für eine Reject-Transporteinheit (RT) dargestellt, die mit dem Barcode 31 eine eindeutige maschinenlesbare Kennung aufweist. Die Auflagefläche, auf der die Reject-Wertdokumente aufliegen, ist in diesem Beispiel schräg in Bezug auf den Boden der RT, um eine Schräglage der Reject-Transporteinrichtung 10 auszugleichen. Da die Reject-Wertdokumente dann so auf dem Boden aufliegen, dass deren Gewichtskraft möglichst senkrecht zur Wertdokumentoberfläche verläuft, wird ein Abrutschen der Wertdokumente aus der RT vermieden. Alternativ kann die Auflagefläche für die Wertdokumente natürlich auch parallel zum Boden der RT sein. Der Boden der RT aus Fig. 1b weist horizontale Aussparungen 35 auf, zwischen denen abwechselnd kurze Stützen 37 und lange Stützen 34 ausgebildet sind, die die Auflagefläche für die Reject-Wertdokumente bilden. Der Platz vor und nach den kurzen Stützen 37 erleichtert ein manuelles Einlegen und Entnehmen der Reject-Wertdokumente. Die Vorderseite der RT (links) weist an ihrer Oberkante mehrere Stufen 32 auf, die, wenn sich die RT in der Reject-Ablage 5 befindet, sich mit dem (auch mit entsprechenden Stufen versehenen) Ausstreifer des Reject-Staplerrads 50 zu einer ebenen Fläche ergänzen, damit die abgestapelten Wertdokumente beim Ausstreifen aus dem Staplerrad 50 nirgends einhaken können, vgl. Fig. 2.

Figur 2 zeigt ein erstes Ausführungsbeispiel der Reject-Transporteinrichtung 10 für die Wertdokumentbearbeitungsvorrichtung 100 gezeigt. Von der Wertdokumentbearbeitungsvorrichtung 100 sind in Figur 2 lediglich das Eingabefach 20 mit der Vereinzelungseinrichtung 27 und das Staplerrad 50 der Reject-Ablage 5 dargestellt. Im gezeigten Beispiel weist die Reject-Transporteinrichtung 10 acht Reject-Transporteinheiten RT auf. Eine RT befindet sich eine gerade in der Reject-Ablage 5 zum Ablegen von Reject-Wertdokumenten des gerade vereinzelten Eingangsstapels E. Eine weitere RT wurde gerade ins Eingabefach 20 gebracht, damit die darin befindlichen Reject-Wertdokumente erneut vereinzelt und durch die Vorrichtung 100 geprüft werden, nachdem der Eingangsstapel E fertig bearbeitet ist. Drei RTs, die mit Reject-Wertdokumenten verschiedener Eingangsstapel beladen sind, befinden sich auf dem Transportpfad von der Reject-Ablage 5 zum Eingabefach 20 und drei leere RTs auf dem Transportpfad vom Eingabefach 20 zur Reject-Ablage 5. Die Transportsteuerung 12 steuert die Reject-Transporteinrichtung 10 so, dass eine der Reject-Transporteinheiten RT temporär unter einem Reject-Staplerrad 50 der Wertdokumentbearbeitungsvorrichtung 100 positioniert wird, damit die Reject-Wertdokumente durch das Reject-Staplerrad 50 direkt in die Reject-Transporteinheit RT abgelegt und dort gestapelt werden können. Die Vereinzelung aus dem Eingabefach wird erst dann gestartet, sobald eine leere RT in der Reject-Ablage bereit gestellt wurde. Eine mit Reject-Wertdokumenten beladene RT wird erst dann aus der Reject-Ablage heraustransportiert, nachdem das letzte Wertdokument des zu bearbeitenden Eingangsstapels (bzw. bei einem Rerun der Reject-Wertdokumente das letzte Wertdokument des betreffenden Reject-Stapels) durch die Vorrichtung 100 geprüft und abgelegt wurde.

Im gezeigten Beispiel weist der erste Transportpfad der Reject-Transporteinrichtung 10 mindestens ein erstes Transportband 1 auf, das die leeren Reject-Transporteinheiten RT aus dem Bereich des Eingabefachs 20 in den Bereich der Reject-Ablage 5 transportiert. Der zweite Transportpfad der Reject-Transporteinrichtung 10 weist mindestens ein zweites Transportband 2 auf, das die mit Reject-Wertdokumenten R beladenen Reject-Transporteinheiten RT aus dem Bereich der Reject-Ablage 5 in den Bereich des Eingabefachs 20 transportiert. Ferner weist die Reject-Transporteinrichtung 10 ein drittes Transportband 3 auf, das die mit Reject-Wertdokumenten R beladenen Reject-Transporteinheiten RT am Ende des zweiten Transportbands 2 übernimmt und in das Eingabefach 20 hineintransportiert und die leeren Reject-Transporteinheiten aus dem Eingabefach 20 heraustransportiert und bis zum Beginn des ersten Transportbands 1 transportiert, und ein viertes Transportband 4, das die leeren Reject-Transporteinheiten RT am Ende des ersten Transportbands 1 übernimmt und in die Reject-Ablage 5 transportiert und die beladenen Reject-Transporteinheiten RT aus der Reject-Ablage 5 heraustransportiert und bis zu Beginn des zweiten Transportbands 2 transportiert. An Stelle der Transportbänder 1-4 können auch Transportrollen verwendet werden.

Die Transportbänder 1-4 weisen in diesem Beispiel jeweils zwei parallel zueinander verlaufende Flachriemen 8 auf, auf denen die RTs aufliegen. Zum unabhängigen Bewegen der Transportbänder 1-4 weist jedes Transportband einen eigenen Motor 9 auf. Um die RTs nicht nur parallel zur Richtung der Flachriemen, sondern auch senkrecht zur Richtung der Flachriemen bewegen zu können werden, sind die beiden Transportbänder 3 und 4 mit Hilfe eines Schlittens 7 entlang der Schiene 14 verfahrbar. Dazu wird z.B. eine Riemenantrieb mit einem weiteren Motor 9 verwendet.

Um die RTs voneinander unterscheiden zu können, sind die RTs jeweils mit einer maschinenlesbaren Kennung, z.B. einem individuellen Barcode 31 versehen, vgl. Figur 1b. Dieser Barcode 31 wird mit Hilfe eines Barcodelesers 13 gelesen, der die maschinenlesbare Kennung derjenigen RT feststellt, die sich gerade in der Reject-Ablage 5 befindet, um dort mit Reject-Wertdokumenten beladen zu werden. Im vorliegenden Beispiel ist der Barcodeleser 13 auf dem Schlitten 7 des Transportbands 4 befestigt. Er kann aber auch ortsfest in der Reject-Ablage 5 oder darunter angebracht sein. Der Barcodeleser 13 meldet den Barcode 31 oder die daraus ermittelte Kennung (z.B. Nummer) des jeweiligen RTs an die Steuereinrichtung 60 (Kommunikationsleitung nicht gezeigt). Falls die Anzahl der RTs variabel sein soll, z.B. um RTs manuell von der Reject-Transporteinrichtung 10 entnehmen oder hinzufügen zu können, sollte ein weiterer Barcodeleser 16 vorgesehen sein, um den Barcode (erneut) zu lesen, sobald sich die betreffende RT unmittelbar vor dem Eingabefach 20 befindet. Der zweite Barcodeleser 16 kann auf dem Schlitten 7 des Transportbands 3 vorgesehen werden oder auch im Eingabefach 20.

Beim Ablegen der Reject-Wertdokumente in der Reject-Ablage 5 stellt der Barcodeleser 13 die Kennung der jeweils beladenen RT fest und sendet diese an die Steuereinrichtung 60, die im vorliegenden Beispiel auch als Auswerteeinrichtung dient. Diese ordnet die Kennung des jeweiligen RTs dem jeweiligen Eingangsstapel E zu, der gerade durch die Vorrichtung bearbeitet wird und zu dem die gerade in die Reject-Ablage 5 sortierten Reject-Wertdokumente gehören. Der weitere Barcodeleser 16 stellt die Kennung derjenigen RT fest, deren Reject-Wertdokumente als nächstes in das Eingabefach 20 wiedereingelegt werden und sendet diese ebenfalls an die Steuereinrichtung 60. Durch Vergleichen dieser RT-Kennung mit den zuvor abgespeicherten RT-Kennungen, ermittelt die Steuereinrichtung 60 dann, welchem Eingangsstapel E die ins Eingabefach 20 hineintransportierte RT zuvor zugeordnet wurde. Dadurch kann die Steuereinrichtung 60 feststellen, zu welchem Eingangsstapel E die Reject-Wertdokumente R der im Eingabefach 20 befindlichen RT gehören. Auf diese Weise können die erneut bearbeiteten Reject-Wertdokumente R dem richtigen Eingangsstapel E zugeordnet werden, in dem sie ursprünglich der Vorrichtung 100 zugeführt wurden, selbst wenn eine oder mehrere RTs im Bereich des zweiten Transportbands 2 hinzugefügt oder entnommen werden.

Falls derartige manuelle Zugriffe ausgeschlossen werden können, ist die Anzahl und Reihenfolge der RTs auf der Reject-Transporteinrichtung 10 unveränderlich und daher der weitere Barcodeleser 16 nicht notwendig. Die Steuereinrichtung 60 zählt dann mit, von wievielen RTs, die zu dem Eingabefach zurücktransportiert wurden, die Reject-Wertdokumente bereits in das Eingabefach 20 transportiert und erneut geprüft wurden. Zum Beispiel werden die Reject-Wertdokumente des ersten RTs, das am Eingabefach 20 ankommt, dem zuerst durch die Vorrichtung 100 bearbeiteten Eingangsstapel E zugeordnet, die des zweiten RTs dem zweiten Eingangsstapel, usw. Bei Einhaltung der gleichen Reihenfolge der Eingangsstapel und RTs ist so die richtige Zuordnung der jeweils erneut geprüften Reject-Wertdokumente zum zugehörigen Eingangsstapel möglich.

Reject-Wertdokumente, die mit Hilfe einer RT zum Eingabefach 20 zurücktransportiert und erneut durch die Vorrichtung 100 geprüft werden, werden z.B. erneut in eine (andere) RT abgelegt. Da bei diesem erneuten Prüfen im Allgemeinen einige Reject-Wertdokumente als gültig beurteilt werden (z.B. falls der Reject-Grund ein Transportfehler war), reduziert sich die Anzahl der Reject-Wertdokumente bei diesem erneuten Prüfen. Die Kennung der betreffenden RT, in die die erneut geprüften Reject-Wertdokumente abgelegt werden, wird entsprechend mit einer Information darüber verknüpft, dass es sich um erneut zu prüfende Reject-Wertdokumente handelt, und ggf. wie oft diese bereits einer Prüfung durch die Vorrichtung 100 unterzogen wurden.

Figur 3a-c zeigt ein Beispiel dafür, wie die Reject-Wertdokumente R schrittweise aus der RT automatisch entnommen werden können, wenn sich die RT in dem Eingabefach 20 befindet, hier durch einen Rechen 21 oder 22 des Eingabefachs (die übrigen Komponenten des Eingabefachs 20 sind weggelassen). Der Rechen 21 bzw. 22 ist entlang zweier Richtungen bewegbar, parallel zu seinen Fingern und senkrecht zur Wertdokumentebene. In Fig. 3a befindet er sich noch außerhalb der RT, in einer Höhe zwischen der Unterseite der Reject-Wertdokumente R und der Unterseite des Bodens 33 der RT. In Figur 3b wurde der Rechen 21 bzw. 22 horizontal entlang seiner Finger unter die Reject-Wertdokumente R in den Boden 33 des RTs eingeschoben, wobei die Finger des Rechens in die Aussparungen 35 der RT eintauchen. Anschließend wird der Rechen 21 bzw. 22 nach oben gefahren, um die Reject-Wertdokumente aus dem RT bis zum Vereinzeler 27 des Eingabefachs 20 anzuheben, vgl. Fig. 3c.

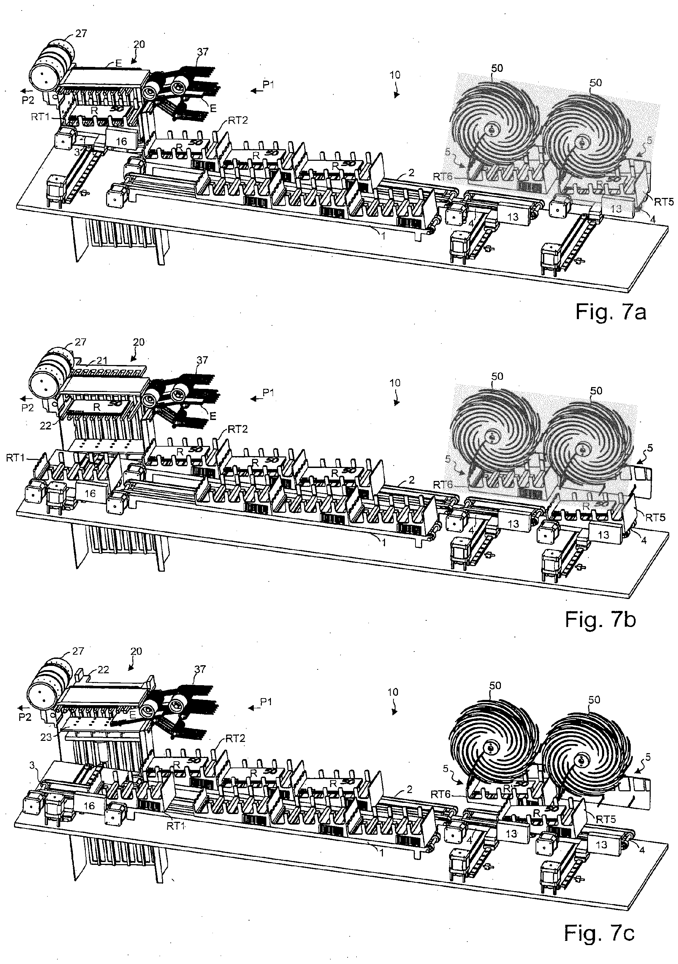

In Fig. 4 ist eine Möglichkeit für das automatische Zuführen von Wertdokumentstapeln zum Eingabefach 20 der Vorrichtung 100 dargestellt. Das Eingabefach weist in diesem Beispiel zwei Rechen 21, 22 auf, die jeweils entlang zweier Richtungen bewegbar sind (parallel zu den Fingern und senkrecht zur Wertdokumentebene). Zum Zuführen der Eingangsstapel E werden diese mit Hilfe einer Stapel-Transporteinrichtung 37 entlang des Pfeils P1 auf eine Ablageplatte 23 des Eingabefachs befördert. Die Steuereinrichtung 60 stimmt das Timing der Zuführung der Eingangsstapel E mit der Transportsteuerung 12 der Reject-Transporteinrichtung 10 ab. Gegebenenfalls verbleibt der Eingangsstapel E in einer Wartestellung, bevor er mittels der Stapel-Transporteinrichtung 37 in das Eingabefach 20 hineingeschoben wird. Nachdem die Ablageplatte 23 mittels des Motors 28 bis knapp unter die Eintrittsposition des Eingangsstapel E hochgefahren wurde, wird der Eingangsstapel E mit Hilfe der Stapel-Transporteinrichtung 37 auf die Ablageplatte 23 geschoben. Unter der Ablageplatte 25 ist eine mit Stiften 26 versehene Stiftplatte 24 angebracht, die bei Bedarf von unten an die Ablageplatte 23 herangefahren werden kann, um die Stifte 26 durch die Löcher 25 hindurchzuschieben und so die auf der Ablageplatte 23 abgelegten Wertdokumente anzuheben. Zwischen den so angehobenen Eingangsstapel E und die Ablageplatte 23 kann einer der Rechen 21, 22 des Eingabefachs eintauchen, um den Eingangsstapel von den Stiften 26 nach oben abzuheben und zur Vereinzelungseinrichtung zu befördern, vgl. dazu auch Figuren 7c-f.

Die Steuereinrichtung 60 steuert die Zuführung der Eingangsstapel E und der Reject-Wertdokumente R vorzugsweise so, dass unmittelbar vor und nach einem Reject-Stapel ein Eingangsstapel E in das Eingabefach eingelegt wird. Alternativ zur gezeigten Stapel-Transporteinrichtung 37 kann aber auch vorgesehen sein, dass die Eingangsstapel E manuell in das Eingabefach 20 eingelegt werden oder mittels eines Greifers, der die Eingangsstapel E auf eine unter der Reject-Transporteinrichtung 10 vorhandene Ablage (nicht gezeigt) in das Eingabefach 20 einlegt. Diese Ablage weist ebenfalls horizontale Aussparungen auf, in die die Rechen 21, 22 eintauchen können, um die Eingangsstapel anzuheben.

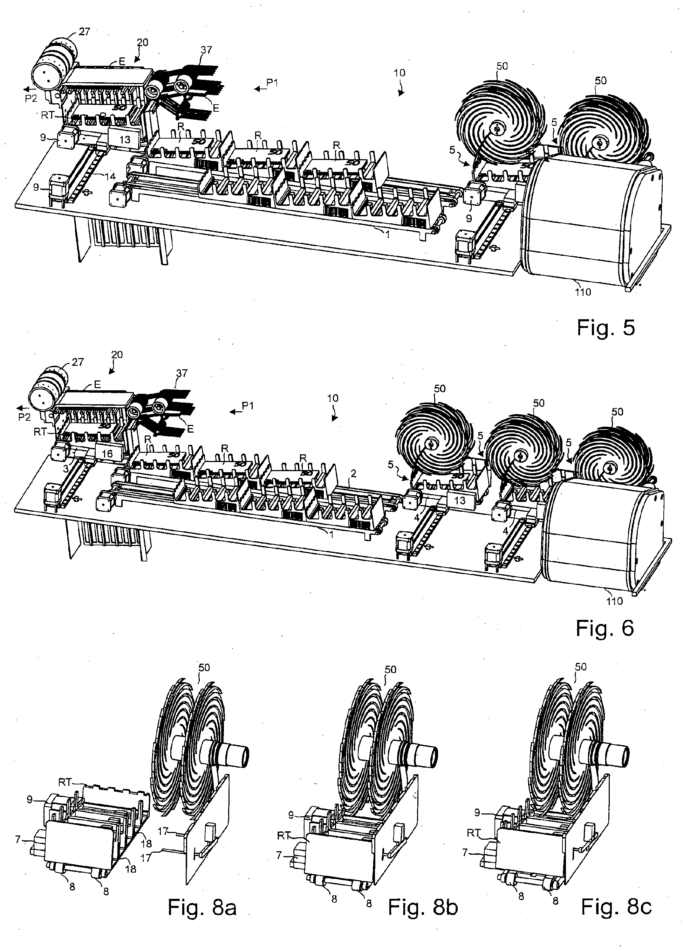

In einem zweiten Ausführungsbeispiel, vgl. Fig. 5, weist die Wertdokumentbearbeitungsvorrichtung zwei Reject-Ablagen 5 auf, zum getrennten Ablegen von Reject-Wertdokumenten, die einer erneuten Prüfung durch die Vorrichtung 100 (Rerun) unterzogen werden sollen einerseits (linke Reject-Ablage 5), und andererseits von Reject-Wertdokumenten, die keiner erneuten Prüfung durch die Vorrichtung 100 unterzogen werden sollen (rechte Reject-Ablage 5). Die erneut zu prüfenden Reject-Wertdokumente der linken Reject-Ablage werden in eine RT abgelegt, mit dieser zu dem Eingabefach 20 zurücktransportiert und erneut in das Eingabefach 20 eingelegt. Die nicht erneut zu prüfenden Reject-Wertdokumente werden aus der rechten Reject-Ablage in einen Zwischenspeicher 110 transportiert, aus dem sie zu einem späteren Zeitpunkt entnommen werden können, um sie erneut zu prüfen, insbesondere um deren Echtheit genauer zu prüfen. Dieser Zwischenspeicher 110 ist z.B. aus der Vorrichtung 100 entnehmbar, um diese erneute Prüfung an einer anderen Vorrichtung durchführen zu können.

Es kann vorgesehen sein, dass die in das Eingabefach zurücktransportierten Reject-Wertdokumente, wenn sie bei der erneuten Prüfung durch die Vorrichtung 100 erneut als Reject-Wertdokumente bewertet werden, wiederum in die linke Reject-Ablage abgelegt und zu dem Eingabefach zurücktransportiert werden, um anschließend erneut geprüft zu werden (zweifacher Rerun). Die erneute Prüfung kann auch mehrfach erfolgen (mehrfacher Rerun). Es kann aber auch vorgesehen sein, dass sie nach der erneuten Prüfung kein zweites Mal zum Eingabefach zurücktransportiert werden, sondern in diesem Fall in den Zwischenspeicher 110 gebracht werden (einfacher Rerun).

Beim Sortieren der Wertdokumente können die Reject-Wertdokumente des jeweiligen Eingangsstapels E zum Beispiel in eine erste und eine zweite Reject-Kategorie aufgeteilt werden, die in diese verschiedene Reject-Ablagen abgelegt werden. Die erste Reject-Kategorie umfasst z.B. die bei der erstmaligen Prüfung nicht-erkannten Wertdokumente und die zweite Reject-Kategorie ggf. vorhandene fälschungsverdächtige Wertdokumente. Insbesondere sind die Reject-Wertdokumente, die in die RT abgelegt und zu dem Eingabefach 20 zurücktransportiert und erneut in das Eingabefach eingelegt werden (Rerun), nur die Reject-Wertdokumente der ersten Kategorie (z.B. die nicht-erkannten Wertdokumente). Die Reject-Wertdokumente der zweiten Kategorie (fälschungsverdächtige) werden bereits beim ersten Sortiervorgang in den Zwischenspeicher 110 gebracht. In dem Zwischenspeicher 110 werden diejenigen Reject-Wertdokumente der zweiten Kategorie (fälschungsverdächtige), die zum selben Eingangsstapel gehören, aufeinander gestapelt, und getrennt von den Reject-Wertdokumenten der zweiten Kategorie (fälschungsverdächtigen) Wertdokumenten anderer Eingangsstapel in dem Zwischenspeicher 110 abgelegt, damit sie später dem richtigen Eingangsstapel zugeordnet werden können.

In einem dritten Ausführungsbeispiel weist die Wertdokumentbearbeitungsvorrichtung zwei Reject-Ablagen 5 auf, die abwechselnd zum Ablegen von Reject-Wertdokumenten verwendet werden, um Reject-Wertdokumente verschiedener Eingangsstapel getrennt voneinander abzulegen, vgl. Fig. 7a. Dadurch wird ein Tandem-Betrieb zweier gleichberechtigter Reject-Ablagen 5 ermöglicht. Die Reject-Transporteinrichtung 10 wird dabei so gesteuert, dass zu jedem Zeitpunkt der Wertdokumentbearbeitung zumindest an einer der beiden Reject-Ablagen 5 eine RT zur Ablage von Reject-Wertdokumenten zur Verfügung steht. So wird sichergestellt, dass auch in der Zeit, während eine mit Reject-Wertdokumenten beladene RT aus einer der Reject-Ablagen heraustransportiert wird und bevor erneut eine leere RT in diese Reject-Ablage hineintransportiert wird, in der anderen Reject-Ablage eine RT zur Ablage von Reject-Wertdokumenten zur Verfügung steht. In den Figuren 7a-j ist der zeitliche Ablauf dieses Tandem-Betriebs dargestellt.

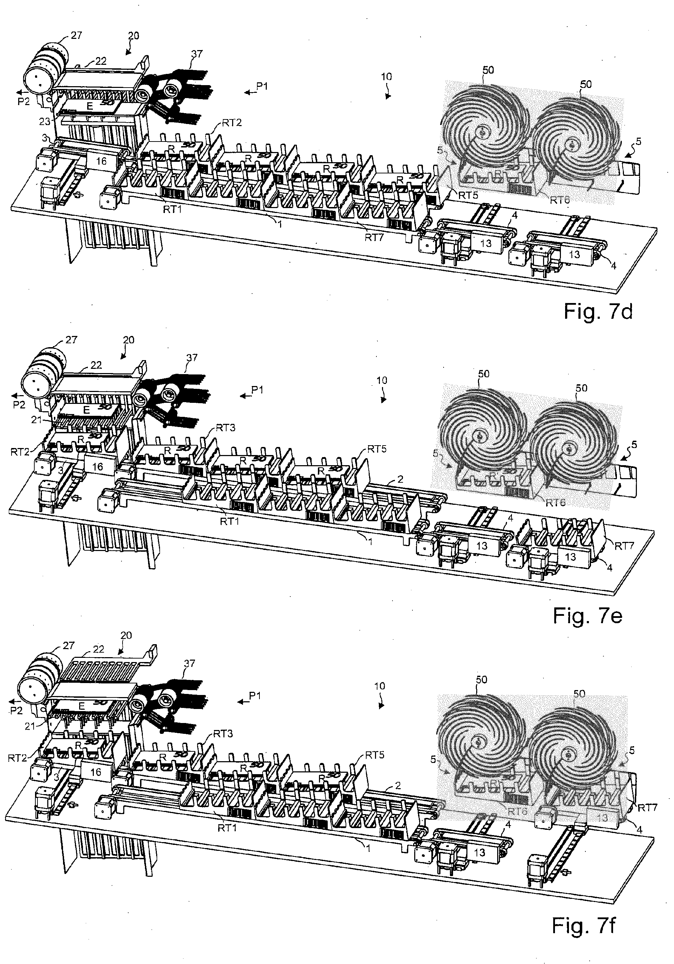

Figur 7a zeigt einen Zeitpunkt, an dem an beiden Reject-Ablagen 5 jeweils eine RT vorhanden ist. Zum gezeigten Zeitpunkt werden im Eingabefach 20 gerade Wertdokumente eines Eingangsstapels E vereinzelt, die mit dem Rechen 21 an die Vereinzelungseinrichtung herangebracht werden. Die Reject-Wertdokumente dieses Eingangsstapels E werden in die rechte Reject-Ablage transportiert und auf die dort bereitgestellte RT 5 abgelegt. Zum Zeitpunkt der Figur 7b ist das Ablegen der Reject-Wertdokumente auf die RT5, die sich in der rechten Reject-Ablage befand, gerade beendet worden und RT5 mit Hilfe des Transportbands 4 der rechten Reject-Ablage nach vorne aus der rechten Reject-Ablage 5 herausgefahren worden. Die RT6 in der linken Reject-Ablage übernimmt gerade die Rolle der aktiven Reject-Ablage. Die fertig beladene RT5 wird durch das rechte Transportband 4 nach links gefahren, vom linken Transportband 4 übernommen und von diesem auf das zweite Transportband 2 gefahren, um in Richtung Eingabefach 20 transportiert zu werden, vgl. Figuren 7b-d. In dieser Zeit steht die rechte Reject-Ablage nicht mehr zur Ablage von Reject-Wertdokumenten zur Verfügung. Damit auch während dieser Zeit die Wertdokumentbearbeitung eines weiteren Eingangsstapels oder Reject-Stapels R weiterlaufen kann, werden die in dieser Zeit auftretenden Reject-Wertdokumente in der linken Reject-Ablage bereitgestellten RT6 gesammelt. Während die nächste leere RT (RT7) in die rechte Reject-Ablage 5 transportiert wird, vgl. Figuren 7d-f, werden die inzwischen auftretenden Rejects in die RT6 abgelegt.

Am Ende des ersten und zweiten Transportbands 1, 2 ist jeweils ein Stoppmechanismus angebracht, z.B. ein vertikal verschiebbarer Stift zwischen den Transportriemen 8 des ersten 1 bzw. zweiten Transportbands 2 (Stift nicht gezeigt), dessen Verschieben von der Transportsteuerung 12 gesteuert wird. In der vertikal oberen Position hält der Stift die am Ende des jeweiligen Transportbands befindliche RT zurück, so dass diese - trotz einer Bewegung des jeweiligen Transportbands 1, 2 - nicht weitertransportiert wird. Durch das Bewegen des Transportbands 1, 2 werden die weiteren RTs an die mit Hilfe des Stoppmechanismus festgehaltene RT herantransportiert, bis sie an dieser anstoßen und dadurch ebenfalls abgestoppt werden. So bildet sich eine Art Warteschlange der mit Reject-Wertdokumenten beladenen RTs. Wenn die am Ende des Transportbands 1 bzw. 2 befindliche RT vom Ende Transportbands 1 bzw. 2 auf das vierte bzw. dritte Transportband übergeben werden soll, sorgt die Transportsteuerung 12 dafür, dass der vertikale Stift nach unten zurückgezogen wird, und die nächste RT vorbeigelassen wird. Nach dieser nächsten RT wird der Stift wieder hochgefahren, um den Stoppmechanismus zum Abstoppen der folgenden RT erneut zu aktivieren.

Sobald die RT6 in der linken Reject-Ablage 5 bereitgestellt ist, kann damit begonnen werden, die Reject-Wertdokumente der RT1, die ins Eingabefach 20 transportiert wurde, erneut zu vereinzeln, vgl. Figuren 7a-c (Rerun). Die in Figur 7a im Eingabefach 20 befindliche RT 1 ist in Figur 7c bereits ausgeleert und auf das erste Transportband 1 transportiert worden. Aus der RT1 werden die Reject-Wertdokumente R mittels des Rechens 22 herausgehoben, vgl. Fig. 3a-c. Der Rechen 21 wird, nachdem das letzte Reject-Wertdokument des Eingangsstapels E vereinzelt wurde, nach hinten weggezogen (vgl. Figur 7b) und nach unten gefahren, um dort zum Anheben des nächsten Eingangsstapels E verwendet zu werden, vgl. Figuren 7e-g. Dieser nächste Eingangsstapel E wird durch die Stapel-Transporteinrichtung 37 auf die Ablageplatte 23 geschoben und mittels der Stifte 26 angehoben, so dass der Rechen 21 unter den Eingangsstapel eingefahren werden kann, vgl. Figuren 7c-f und Figur 4. Die Reject-Wertdokumente R des Eingangsstapels E, der in den Figuren 7c-g in das Eingabefach 20 eingeschoben und aus diesem vereinzelt wird, werden in die in der rechten Reject-Ablage 5 bereitgestellte RT7 abgelegt, vgl. Figuren 7f-h. Die in der RT6 abgelegten Reject-Wertdokumente R' haben bereits einen ersten Rerun durchlaufen und werden für den zweiten Rerun in der RT6 zum Eingabefach 20 zurücktransportiert.

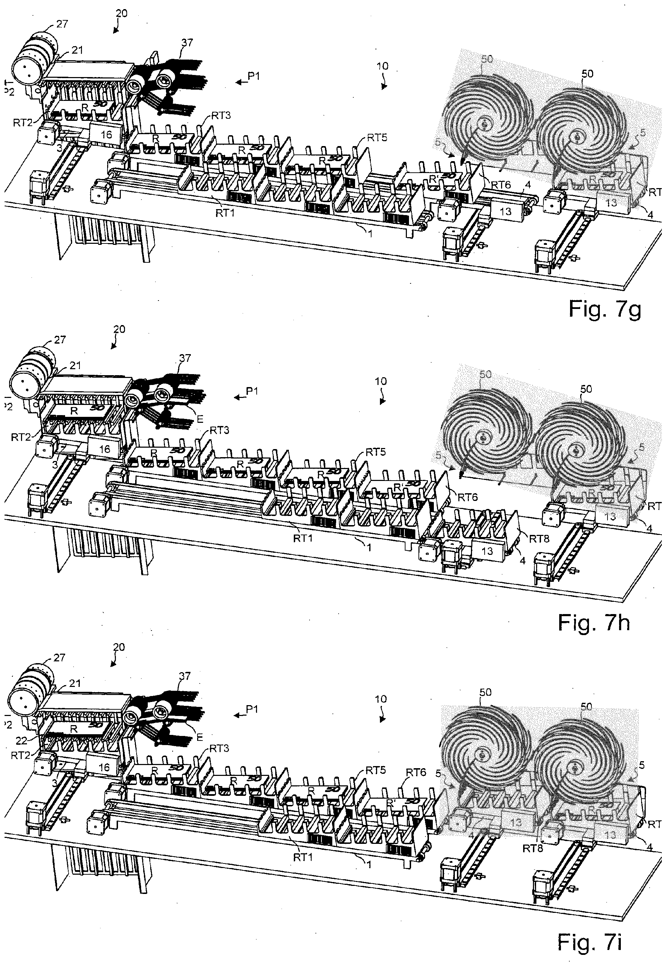

Sobald auch die RT6 in der linken Reject-Ablage 5 fertig beladen ist, wird die RT6 mit Hilfe des linken Transportbands 4 aus der linken Reject-Ablage 5 nach vorne transportiert und ebenfalls auf das Transportband 2 in Richtung Eingabefach 20 transportiert, vgl. Figuren 7g-h. Sobald das linke Transportband 4 frei ist, wird dieses ans Ende des vorderen Transportbands 1 gefahren, wo die leere RT8 von dem Transportband 1 auf das linke Transportband 4 transportiert wird und mittels dessen in die linke Reject-Ablage 5, vgl. Figuren 7h-i. In die RT8 werden die Reject-Wertdokumente R' abgelegt, die mittels der RT2 zum Eingabefach zurücktransportiert wurden. Bei diesen Reject-Wertdokumenten R' handelt es sich um Reject-Wertdokumente R', die bereits ein zweites Mal geprüft wurden (erster Rerun), und die ein zweites Mal zum Eingabefach 20 zurücktransportiert werden, um ein drittes Mal durch die Vorrichtung 100 geprüft zu werden (zweiter Rerun).

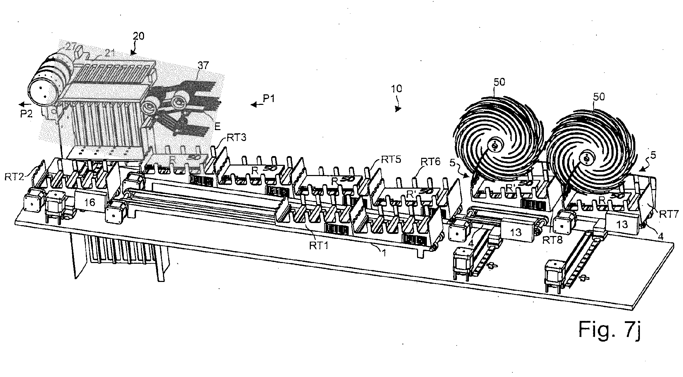

In Figur 7j ist zu erkennen, dass das linke Transportband 4, das sich in Figur 7i noch unter dem linken Reject-Staplerrad 50 befand, aus dem Bereich der linken Reject-Ablage 5 nach vorne herausgefahren ist, die RT8 aber unter dem linken Staplerrad 50 geblieben ist. Die RT8, die sich in der linken Reject-Ablage befindet, wurde zu diesem Zweck mit Hilfe eines Hebemechanismus vom linken Transportband 4 abgehoben, vgl. Figur 8a-c. Für den Hebemechanismus stehen aus der Rückplatte der Reject-Ablage 5 zwei Stifte 17 heraus, die, beim Hineintransportieren der RT8 mittels des Transportbands 4, in entsprechende Löcher 18 der RT8 (vgl. Figur 3c) eingeschoben werden, vgl. Figuren 8a-b. Anschließend werden die beiden Stifte 17 nach oben bewegt, um die RT8 vom Transportband 4 abzuheben, vgl. Figur 8c. In dieser abgehobenen Position können die Reject-Wertdokumente vom Staplerrad 50 auf die RT8 abgelegt werden. Das linke Transportband 4 kann währenddessen zum Transportieren der (von der rechten Reject-Ablage 5 kommenden) mit Reject-Wertdokumenten R beladenen RT7 verwendet werden, um diese vom rechten Transportband 4 auf das Transportband 2 in Richtung Eingabefach 20 zu befördern (analog zu Fig. 7b-d).

In Figur 6 ist ein viertes Ausführungsbeispiel gezeigt, das auf dem dritten Ausführungsbeispiel basiert, aber zusätzlich eine dritte Reject-Ablage 5 aufweist. Die in die rechte Reject-Ablage abgelegten Reject-Wertdokumente werden in einen Zwischenspeicher 110 transportiert, wie es in Verbindung mit Figur 5 beschrieben wurde. Die linken beiden Reject-Ablagen 5 werden für den Tandem-Betrieb analog zu den Figuren 7a-j verwendet.

## Patentansprüche

1. Verfahren zum Bearbeiten von Wertdokumenten mit Hilfe einer Wertdokumentbearbeitungsvorrichtung (100),
a) Einlegen eines oder mehrerer Eingangsstapel (E) von Wertdokumenten in ein Eingabefach (20) der Wertdokumentbearbeitungsvorrichtung,
b) Vereinzeln der Wertdokumente aus dem Eingabefach (20) durch eine Vereinzelungseinrichtung (27) der Wertdokumentbearbeitungsvorrichtung,
c) erstmaliges Prüfen der Wertdokumente durch mindestens einen Sensor (30) der Wertdokumentbearbeitungsvorrichtung,
d) Transportieren der Wertdokumente in Abhängigkeit von Ergebnissen des Prüfens und Sortieren der Wertdokumente in verschiedene Ablagefächer der Wertdokumentbearbeitungsvorrichtung, wobei Reject-Wertdokumente (R) von den gültigen Wertdokumenten (G) getrennt und in eine Reject-Ablage (5) abgelegt werden,
e) Zurücktransportieren der Reject-Wertdokumente von der Reject-Ablage (5) zu dem Eingabefach mit Hilfe einer Reject-Transporteinrichtung (10) und Wiedereinlegen der Reject-Wertdokumente in das Eingabefach,
f) Wiederholen der Schritte b)-d), um die Reject-Wertdokumente erneut zu prüfen, **dadurch gekennzeichnet, dass**
- die Reject-Transporteinrichtung (10) mehrere Reject-Transporteinheiten (RT) aufweist, die jeweils eine individuelle maschinenlesbare Kennung (31) aufweisen,
- die Reject-Wertdokumente der verschiedenen Eingangsstapel (E) voneinander getrennt in verschiedene Reject-Transporteinheiten (RT) abgelegt werden, und in den verschiedenen Reject-Transporteinheiten zu dem Eingabefach (20) der Wertdokumentbearbeitungsvorrichtung zurücktransportiert werden,
- die Reject-Transporteinrichtung (10) einen Leser (13) zum Einlesen der maschinenlesbaren Kennung der Reject-Transporteinheiten (RT) aufweist,
- die durch den Leser (13) eingelesene maschinenlesbare Kennung der jeweiligen Reject-Transporteinheit (RT) dazu verwendet wird, die Reject-Wertdokumente der jeweiligen Reject-Transporteinheit (RT) dem Eingangsstapel (E) zuzuordnen, zu dem diese Reject-Wertdokumente gehören.

2. Verfahren nach Anspruch 1, **dadurch gekennzeichnet, dass** jeweils eine der Reject-Transporteinheiten (RT) durch Bewegen der Reject-Transporteinrichtung (10) temporär so in der Reject-Ablage (5) der Wertdokumentbearbeitungsvorrichtung positioniert wird, dass die Reject-Wertdokumente direkt aus der Wertdokumentbearbeitungsvorrichtung (100) in die Reject-Transporteinheit (RT) abgelegt werden können.

3. Verfahren nach einem der vorhergehenden Ansprüche, **dadurch gekennzeichnet, dass** der Leser (13) so an der Reject-Transporteinrichtung (10) angeordnet ist, dass er die maschinenlesbare Kennung (31) der Reject-Transporteinheiten (RT) beim Beladen der Reject-Transporteinheiten in der Reject-Ablage (5) auslesen kann.

4. Verfahren nach einem der vorhergehenden Ansprüche, **dadurch gekennzeichnet, dass** die Reject-Wertdokumente der zum Eingabefach zurücktransportierten Reject-Transporteinheiten (RT) automatisch in das Eingabefach (20) wiedereingelegt werden und die jeweilige Reject-Transporteinheit dadurch ausgeleert wird, und dass die ausgeleerte Reject-Transporteinheit (RT) mit Hilfe der Reject-Transporteinrichtung (10) zu der Reject-Ablage zurücktransportiert wird und dort wieder zur Aufnahme von Reject-Wertdokumenten bereitgestellt wird.

5. Verfahren nach einem der vorhergehenden Ansprüche, **dadurch gekennzeichnet, dass** das Wiedereinlegen der Reject-Wertdokumente aus den Reject-Transporteinheiten (RT) in das Eingabefach (20) so frühzeitig durchgeführt wird, dass in der Reject-Transporteinrichtung zu jedem Zeitpunkt der Wertdokumentbearbeitung mindestens eine leere Reject-Transporteinheit (RT) zur Aufnahme von Reject-Wertdokumenten des gerade bearbeiteten Eingangsstapels zur Verfügung steht, beispielsweise dass das Wiedereinlegen der Reject-Wertdokumente in das Eingabefach spätestens dann veranlasst wird, wenn nur noch eine einzige leere Reject-Transporteinheit (RT) in der Reject-Transporteinrichtung (10) vorhanden ist.

6. Verfahren nach einem der vorhergehenden Ansprüche, **dadurch gekennzeichnet, dass** die Reject-Wertdokumente der zum Eingabefach zurücktransportierten Reject-Transporteinheiten (RT) jeweils derart zwischen zwei Eingangsstapel (E) in das Eingabefach (20) wiedereingelegt werden, dass jeweils unmittelbar vor den Reject-Wertdokumenten (R) der jeweiligen Transporteinheit und unmittelbar nach den Reject-Wertdokumenten (R) der jeweiligen Transporteinheit, ein Eingangsstapel (E) durch die Wertdokumentbearbeitungsvorrichtung bearbeitet wird, aber die Reject-Wertdokumente zweier verschiedener Reject-Transporteinheiten nicht unmittelbar nacheinander bearbeitet werden.

7. Verfahren nach einem der vorhergehenden Ansprüche, **dadurch gekennzeichnet, dass** beim erneuten Prüfen der Reject-Wertdokumente eine modifizierte Echtheitsprüfung der Reject-Wertdokumente durchgeführt wird, bei der die Reject-Wertdokumente weniger streng auf ihre Echtheit geprüft werden als bei dem erstmaligen Prüfen.

8. Verfahren nach einem der vorhergehenden Ansprüche, **dadurch gekennzeichnet, dass** im Eingabefach mindestens ein Rechen (21, 22) vorgesehen ist, der die Reject-Wertdokumente aus der jeweiligen Reject-Transporteinheit (RT) herausheben und bis zur Vereinzelungseinrichtung (27) anheben kann, damit die Reject-Wertdokumente dort erneut vereinzelt werden.

9. Verfahren nach einem der vorhergehenden Ansprüche, **dadurch gekennzeichnet, dass** die Reject-Transporteinheiten (RT) jeweils einen mäanderförmigen Boden (33) aufweisen, auf dem die Reject-Wertdokumente ablegbar sind, wobei der mäanderförmige Boden (33) derart mäanderförmig ausgebildet ist, dass ein Rechen (21, 22) des Eingabefachs in den mäanderförmigen Boden und dabei unter die Reject-Wertdokumente eintauchen kann, um die auf dem mäanderförmigen Boden (33) liegenden Reject-Wertdokumente aus der Reject-Transporteinheit (RT) herauszuheben.

10. Verfahren nach einem der vorhergehenden Ansprüche, **dadurch gekennzeichnet, dass** die Reject-Transporteinrichtung (10) zwei Transportpfade aufweist, die derart getrennt voneinander ausgebildet sind, dass sie einen geschlossenen Umlauf der Reject-Transporteinheiten von der Reject-Ablage (5) bis zu dem Eingabefach (20) und wieder zurück ermöglichen, wobei die Reject-Transporteinheiten entlang eines ersten Transportpfads aus dem Bereich des Eingabefachs (20) in den Bereich der Reject-Ablage (5) transportiert werden und, nachdem die Reject-Wertdokumente in der Reject-Ablage in die jeweilige Reject-Transporteinheit abgelegt wurden, entlang eines zweiten Transportpfads aus dem Bereich der Reject-Ablage (5) in den Bereich des Eingabefachs (20) transportiert werden.

11. Verfahren nach einem der vorhergehenden Ansprüche, **dadurch gekennzeichnet, dass** die Reject-Transporteinrichtung (10) Folgendes aufweist:
- eine erste Transporteinrichtung (1), insbesondere ein erstes Transportband, die die leeren Reject-Transporteinheiten aus dem Bereich des Eingabefachs in den Bereich der Reject-Ablage transportiert, und
- eine zweite Transporteinrichtung (2), insbesondere ein zweites Transportband, die die mit Reject-Wertdokumenten beladenen Reject-Transporteinheiten aus dem Bereich der Reject-Ablage in den Bereich des Eingabefachs transportiert, und
- eine dritte Transporteinrichtung (3), insbesondere ein drittes Transportband, die die mit Reject-Wertdokumenten beladenen Reject-Transporteinheiten am Ende der zweiten Transporteinrichtung übernimmt und in das Eingabefach transportiert und die leeren Reject-Transporteinheiten aus dem Eingabefach heraustransportiert und bis zum Beginn der ersten Transporteinrichtung transportiert, und
- eine vierte Transporteinrichtung (4), insbesondere ein viertes Transportband, die die leeren Reject-Transporteinheiten am Ende der ersten Transporteinrichtung übernimmt und in die Reject-Ablagetransportiert und die mit Reject-Wertdokumenten beladenen Reject-Transporteinheiten aus der Reject-Ablage heraustransportiert und bis zum Beginn der zweiten Transporteinrichtung transportiert.

12. Verfahren nach einem der vorhergehenden Ansprüche, **dadurch gekennzeichnet, dass** die Wertdokumentbearbeitungsvorrichtung zwei Reject-Ablagen (5) aufweist, die abwechselnd zum Ablegen von Reject-Wertdokumenten verwendet werden, die zu aufeinander folgend in das Eingabefach eingelegten Wertdokumentstapeln, insbesondere Eingangsstapeln und/oder Rejectstapeln, gehören, und dass die Reject-Transporteinrichtung so gesteuert wird, dass zu jedem Zeitpunkt der Wertdokumentbearbeitung zumindest an einer der Reject-Ablagen (5) eine Reject-Transporteinheit (RT) zur Ablage von Reject-Wertdokumenten zur Verfügung steht.

13. Verfahren nach einem der vorhergehenden Ansprüche, **dadurch gekennzeichnet, dass** die Wertdokumentbearbeitungsvorrichtung mindestens zwei Reject-Ablagen (5) aufweist, die zum getrennten Ablegen von Reject-Wertdokumenten verschiedener Reject-Ursachen verwendet werden, und dass beim Sortieren der Wertdokumente die Reject-Wertdokumente des jeweiligen Wertdokumentstapels, insbesondere Eingangsstapels oder Rejectstapels, in eine erste und eine zweite Reject-Kategorie aufgeteilt werden, die in verschiedene der Reject-Ablagen abgelegt werden, wobei die erste Reject-Kategorie die bei der Prüfung nicht-erkannten Wertdokumente umfasst und die zweite Reject-Kategorie die fälschungsverdächtigen Wertdokumente umfasst.

14. Verfahren nach Anspruch 13, **dadurch gekennzeichnet, dass** die Reject-Wertdokumente, die in einer der Reject-Ablagen (5) in eine Reject-Transporteinheit (RT) abgelegt und zu dem Eingabefach zurücktransportiert und erneut in das Eingabefach eingelegt werden, nur die Reject-Wertdokumente der ersten Kategorie sind, und dass die Reject-Wertdokumente der zweiten Kategorie in eine andere Reject-Ablage abgelegt und von dort in einen Zwischenspeicher (110) transportiert werden, aus dem sie zu einem späteren Zeitpunkt entnommen werden können, um deren Echtheit erneut zu prüfen.

15. Vorrichtung (100) zum Bearbeiten von Wertdokumenten, mit
a) einem Eingabefach (20) zur Aufnahme eines oder mehrerer Eingangsstapel von Wertdokumenten, die in das Eingabefach eingelegt werden,
b) eine Vereinzelungseinrichtung (27) zum Vereinzeln der Wertdokumente aus dem Eingabefach,
c) mindestens einen Sensor (30) zum Prüfen der Wertdokumente,
d) ein Transportsystem (90) zum Transportieren der Wertdokumente in Abhängigkeit von Ergebnissen der Prüfung und zum Sortieren der Wertdokumente in verschiedene Ablagefächer der Wertdokumentbearbeitungsvorrichtung,
e) eine Reject-Transporteinrichtung (10) zum automatischen Zurücktransportieren von Reject-Wertdokumenten von der Reject-Ablage (5) zu dem Eingabefach (20),
f) eine Steuerungseinrichtung (60), die ausgebildet ist, die Vorrichtung und die Reject-Transporteinrichtung (10) so zu steuern
- dass die Reject-Wertdokumente von den gültigen Wertdokumenten getrennt in eine Reject-Ablage (5) abgelegt werden,
- dass die Reject-Wertdokumente von der Reject-Ablage zum Eingabefach (20) zurücktransportiert und erneut in das Eingabefach eingelegt werden,
- die in das Eingabefach (5) erneut eingelegten Reject-Wertdokumente erneut durch die Vorrichtung (100) geprüft werden,
**dadurch gekennzeichnet, dass**
- die Reject-Transporteinrichtung (10) mehrere Reject-Transporteinheiten (RT) aufweist, die jeweils eine individuelle maschinenlesbare Kennung (31) aufweisen,
- die Reject-Transporteinrichtung (10) einen Leser (13) zum Einlesen der maschinenlesbaren Kennung (31) der Reject-Transporteinheiten aufweist,
- die Steuerungseinrichtung (60) ausgebildet ist, die Reject-Transporteinrichtung so zu steuern, dass die Reject-Wertdokumente der verschiedenen Eingangsstapel (E) voneinander getrennt in verschiedene Reject-Transporteinheiten (RT) abgelegt werden, und in den verschiedenen Reject-Transporteinheiten zu dem Eingabefach (20) der Wertdokumentbearbeitungsvorrichtung zurücktransportiert werden,
- eine Auswerteeinrichtung (60), die ausgebildet ist, die durch den Leser eingelesene maschinenlesbaren Kennung (31) der jeweiligen Reject-Transporteinheit dazu zu verwenden, die Reject-Wertdokumente aus der jeweiligen Reject-Transporteinheit (RT), dem Eingangsstapel (E) zuzuordnen, zu dem diese Reject-Wertdokumente gehören.

## Claims

1. A method for processing value documents with the aid of a value document processing apparatus (100),
a) inserting one or several input stacks (E) of value documents in an input pocket (20) of the value document processing apparatus,
b) singling the value documents from the input pocket (20) by a singling device (27) of the value document processing apparatus,
c) initial checking of the value documents by at least one sensor (30) of the value document processing apparatus,
d) transporting the value documents in dependence on results of the checking and sorting the value documents into different deposit pockets of the value document processing apparatus, wherein reject value documents (R) are separated from the valid value documents (G) and deposited in a reject deposit means (5),
e) transporting the reject value documents back from the reject deposit means (5) to the input pocket with the aid of a reject transport device (10) and re-inserting the reject value documents in the input pocket,
f) repeating the steps b)-d) to check the reject value documents again, **characterized in that**
- the reject transport device (10) has several reject transport units (RT) which each have an individual machine-readable identifier (31),
- the reject value documents of the different input stacks (E) are deposited separately from each other in different reject transport units (RT) and are transported back to the input pocket (20) of the value document processing apparatus in the different reject transport units,
- the reject transport device (10) has a reader (13) for reading the machine-readable identifier of the reject transport units (RT),
- the machine-readable identifier of the respective reject transport unit (RT) read by the reader (13) is employed for assigning the reject value documents of the respective reject transport unit (RT) to the input stack (E) to which these reject value documents belong.

2. The method according to claim 1, **characterized in that,** by moving the reject transport device (10), respectively one of the reject transport units (RT) is temporarily positioned in the reject deposit means (5) of the value document processing apparatus such that the reject value documents can be deposited in the reject transport unit (RT) directly from the value document processing apparatus (100).

3. The method according to any of the preceding claims, **characterized in that** the reader (13) is arranged on the reject transport device (10) such that it can read out the machine-readable identifier (31) of the reject transport units (RT) during the loading of the reject transport units in the reject deposit means (5).

4. The method according to any of the preceding claims, **characterized in that** the reject value documents of the reject transport units (RT) transported back to the input pocket are automatically re-inserted in the input pocket (20) and the respective reject transport unit is emptied thereby, and that the emptied reject transport unit (RT) is transported back to the reject deposit means with the aid of the reject transport device (10) and is again made available there for receiving reject value documents.

5. The method according to any of the preceding claims, **characterized in that** the re-insertion of the reject value documents from the reject transport units (RT) in the input pocket (20) is carried out at such an early stage that in the reject transport device at least one empty reject transport unit (RT) is available at any given time of the value document processing for receiving reject value documents from the currently processed input stack, for example that the re-insertion of the reject value documents in the input pocket is initiated at the latest when only one single empty reject transport unit (RT) is still present in the reject transport device (10).

6. The method according to any of the preceding claims, **characterized in that** the reject value documents of the reject transport units (RT) transported back to the input pocket are each re-inserted in the input pocket (20) between two input stacks (E) in such a fashion that an input stack (E) is processed by the value document processing apparatus respectively immediately before the reject value documents (R) of the respective transport unit and immediately after the reject value documents (R) of the respective transport unit, but that the reject value documents of two different reject transport units are not processed in immediate succession.

7. The method according to any of the preceding claims, **characterized in that** upon checking the reject value documents again, a modified authenticity check of the reject value documents is carried out, in which the reject value documents are checked for their authenticity less strictly than upon the initial checking.

8. The method according to any of the preceding claims, **characterized in that** in the input pocket at least one rake (21, 22) is provided which can lift the reject value documents from the respective reject transport unit (RT) and can raise them up to the singling device (27) for the reject value documents to be singled there again.

9. The method according to any of the preceding claims, **characterized in that** the reject transport units (RT) each have a meandering bottom (33) on which the reject value documents can be deposited, wherein the meandering bottom (33) is configured in such meandering fashion that a rake (21, 22) of the input pocket can dive into the meandering bottom, thereby diving below the reject value documents, in order to lift the reject value documents lying on the meandering bottom (33) from the reject transport unit (RT).

10. The method according to any of the preceding claims, **characterized in that** the reject transport device (10) has two transport paths which are formed in such a mutually separate fashion that they allow a closed circulation of the reject transport units from the reject deposit means (5) to the input pocket (20) and back again, wherein the reject transport units are transported along a first transport path from the area of the input pocket (20) to the area of the reject deposit means (5) and, after the reject value documents in the reject deposit means were deposited in the respective reject transport unit, are transported along a second transport path from the area of the reject deposit means (5) to the area of the input pocket (20).

11. The method according to any of the preceding claims, **characterized in that** the reject transport device (10) has the following:
- a first transport device (1), in particular a first conveyor belt, which transports the empty reject transport units from the area of the input pocket to the area of the reject deposit means, and
- a second transport device (2), in particular a second conveyor belt, which transports the reject transport units loaded with reject value documents from the area of the reject deposit means to the area of the input pocket, and
- a third transport device (3), in particular a third conveyor belt, which takes over the reject transport units loaded with reject value documents at the end of the second transport device and transports them into the input pocket and transports the empty reject transport units out of the input pocket and up to the start of the first transport device, and
- a fourth transport device (4), in particular a fourth conveyor belt, which takes over the empty reject transport units at the end of the first transport device and transports them into the reject deposit means and transports the reject transport units loaded with reject value documents out of the reject deposit means and up to the start of the second transport device.

12. The method according to any of the preceding claims, **characterized in that** the value document processing apparatus has two reject deposit means (5) which are employed alternately for depositing reject value documents that belong to value document stacks inserted in the input pocket consecutively, in particular input stacks and/or reject stacks, and that the reject transport device is controlled such that at any given time of the value document processing there is available a reject transport unit (RT) at at least one of the reject deposit means (5) for depositing reject value documents.

13. The method according to any of the preceding claims, **characterized in that** the value document processing apparatus has at least two reject deposit means (5) which are employed for separately depositing reject value documents having different reject causes and that upon sorting the value documents the reject value documents of the respective value document stack, in particular input stack or reject stack, are divided into a first and a second reject category, which are deposited in different ones of the reject deposit means, wherein the first reject category includes the value documents not recognized upon the check and the second reject category includes the value documents suspected of forgery.

14. The method according to claim 13, **characterized in that** the reject value documents that are deposited in a reject transport unit (RT) in one of the reject deposit means (5) and transported back to the input pocket and re-inserted in the input pocket, are only the reject value documents of the first category, and that the reject value documents of the second category are deposited in a different reject deposit means and transported from there into a temporary storage (110), from which they can be removed at a later time to check their authenticity again.

15. An apparatus (100) for processing value documents, with
a) an input pocket (20) for receiving one or several input stacks of value documents which are inserted in the input pocket,
b) a singling device (27) for singling the value documents from the input pocket,
c) at least one sensor (30) for checking the value documents,
d) a transport system (90) for transporting the value documents in dependence on results of the check and for sorting the value documents into different deposit pockets of the value document processing apparatus,
e) a reject transport device (10) for automatically transporting reject value documents back from the reject deposit means (5) to the input pocket (20),
f) a control device (60) configured to control the apparatus and the reject transport device (10) such that
- the reject value documents are deposited in a reject deposit means (5) separately from the valid value documents,
- the reject value documents are transported back from the reject deposit means to the input pocket (20) and re-inserted in the input pocket (20),
- the reject value documents re-inserted in the input pocket (5) are checked again by the
apparatus (100), **characterized in that**
- the reject transport device (10) has several reject transport units (RT) which each have an individual machine-readable identifier (31),
- the reject transport device (10) has a reader (13) for reading the machine-readable identifier (31) of the reject transport units,
- the control device (60) is configured to control the reject transport device such that the reject value documents of the different input stacks (E) are deposited in different reject transport units (RT) separately from each other, and are transported back to the input pocket (20) of the value document processing apparatus in the different reject transport units,
- an evaluation device (60) configured to employ the machine-readable identifier (31) of the respective reject transport unit read by the reader for assigning the reject value documents from the respective reject transport unit (RT) to the input stack (E) to which these reject value documents belong.

## Revendications

1. Procédé de traitement de documents de valeur à l'aide d'un dispositif de traitement de documents de valeur (100),
a) placement d'une ou de plusieurs piles d'entrée (E) de documents de valeur dans un casier d'alimentation (20) du dispositif de traitement de documents de valeur,
b) déliassage des documents de valeur depuis le casier d'alimentation (20) par un équipement de déliassage (27) du dispositif de traitement de documents de valeur,
c) première vérification des documents de valeur par au moins un capteur (30) du dispositif de traitement de documents de valeur,
d) transport des documents de valeur en fonction de résultats de la vérification, et triage des documents de valeur dans différents casiers de dépose du dispositif de traitement de documents de valeur, cependant que des documents de valeur de rejet (R) sont séparés des documents de valeur valides (G) et déposés dans un rack pour rejet (5),
e) re-transport, du rack pour rejet (5) au casier d'alimentation, des documents de valeur de rejet, à l'aide d'un équipement de transport de rejet (10), et re-placement, dans le casier d'alimentation, des documents de valeur de rejet,
f) répétition des étapes b)-d) afin de vérifier à nouveau les documents de valeur de rejet, **caractérisé en ce que**
- l'équipement de transport de rejet (10) comporte plusieurs unités de transport de rejet (RT) qui comportent respectivement un identifiant (31) individuel lisible par machine,
- les documents de valeur de rejet des différentes piles d'entrée (E) sont déposés de manière séparée les uns des autres dans différentes unités de transport de rejet (RT) et sont, dans les différentes unités de transport de rejet, re-transportés au casier d'alimentation (20) du dispositif de traitement de documents de valeur,
- l'équipement de transport de rejet (10) comporte un lecteur (13) pour la lecture de l'identifiant lisible par machine des unités de transport de rejet (RT),
- l'identifiant, lisible par machine, lu par le lecteur (13), de l'unité respective de transport de rejet (RT), est utilisé pour affecter les documents de valeur de rejet issus de l'unité respective de transport de rejet (RT) à la pile d'entrée (E) à laquelle appartiennent ces documents de valeur de rejet.

2. Procédé selon la revendication 1, **caractérisé en ce que** respectivement une des unités de transport de rejet (RT) est, par le déplacement de l'équipement de transport de rejet (10), positionnée temporairement de telle façon dans le rack pour rejet (5) du dispositif de traitement de documents de valeur que les documents de valeur de rejet peuvent être directement déposés dans l'unité de transport de rejet (RT) depuis le dispositif de traitement de documents de valeur (100).

3. Procédé selon une des revendications précédentes, **caractérisé en ce que** le lecteur (13) est agencé de telle façon à l'équipement de transport de rejet (10) qu'il peut lire l'identifiant (31) lisible par machine, des unités de transport de rejet (RT), lors du chargement des unités de transport de rejet dans le rack pour rejet (5).

4. Procédé selon une des revendications précédentes, **caractérisé en ce que** les documents de valeur de rejet des unités de transport de rejet (RT) re-transportées au casier d'alimentation sont automatiquement replacés dans le casier d'alimentation (20) et que l'unité de transport de rejet respective est ainsi vidée, et que l'unité de transport de rejet (RT) vidée est, à l'aide de l'équipement de transport de rejet (10), re-transportée au rack pour rejet et y est mise à nouveau à disposition pour la réception de documents de valeur de rejet.

5. Procédé selon une des revendications précédentes, **caractérisé en ce que** le replacement, dans le casier d'alimentation (20), des documents de valeur de rejet issus des unités de transport de rejet (RT), est effectué suffisamment tôt pour que, dans l'équipement de transport de rejet, à tout moment du traitement des documents de valeur, au moins une unité de transport de rejet (RT) vide soit à disposition pour la réception de documents de valeur de rejet de la pile d'entrée venant d'être traitée, par exemple que le replacement des documents de valeur de rejet dans le casier d'alimentation soit au plus tard déclenchée quand il n'y a plus qu'une seule unité de transport de rejet (RT) vide dans l'équipement de transport de rejet (10).

6. Procédé selon une des revendications précédentes, **caractérisé en ce que** les documents de valeur de rejet des unités de transport de rejet (RT) re-transportées au casier d'alimentation sont respectivement replacés de telle façon entre deux piles d'entrée (E) dans le casier d'alimentation (20) que, respectivement juste avant les documents de valeur de rejet (R) de l'unité de transport respective et juste après les documents de valeur de rejet (R) de l'unité de transport respective, une pile d'entrée (E) est traitée par le dispositif de traitement de documents de valeur, mais que les documents de valeur de rejet de deux unités de transport de rejet différentes ne sont pas traitées juste l'une après l'autre.

7. Procédé selon une des revendications précédentes, **caractérisé en ce que**, lors de la nouvelle vérification des documents de valeur de rejet, une vérification modifiée d'authenticité des documents de valeur de rejet est effectuée, lors de laquelle les documents de valeur de rejet sont vérifiés moins rigoureusement quant à leur authenticité que lors de la première vérification.

8. Procédé selon une des revendications précédentes, **caractérisé en ce que**, dans le casier d'alimentation, au moins un râteau (21, 22) est prévu, lequel peut prélever de l'unité de transport de rejet (RT) respective les documents de valeur de rejet et les soulever jusqu'à l'équipement de déliassage (27) afin que les documents de valeur de rejet y soient à nouveau déliassés.

9. Procédé selon une des revendications précédentes, **caractérisé en ce que** les unités de transport de rejet (RT) comportent respectivement un fond (33) en méandres sur lequel les documents de valeur de rejet peuvent être déposés, cependant que le fond (33) en méandres est réalisé de telle façon en méandres qu'un râteau (21, 22) du casier d'alimentation peut s'enfouir dans le fond en méandres en s'enfouissant sous les documents de valeur de rejet afin de prélever de l'unité de transport de rejet (RT) les documents de valeur de rejet se trouvant sur le fond (33) en méandres.

10. Procédé selon une des revendications précédentes, **caractérisé en ce que** l'équipement de transport de rejet (10) comporte deux chemins de transport qui sont réalisés de telle façon séparément l'un de l'autre qu'ils permettent un circuit fermé des unités de transport de rejet du rack pour rejet (5) au casier d'alimentation (20) et à nouveau dans le sens inverse, cependant que les unités de transport de rejet sont, le long d'un premier chemin de transport, transportées de la zone du casier d'alimentation (20) à la zone du rack pour rejet (5) après que les documents de valeur de rejet ont été, dans le rack pour rejet, déposés dans l'unité de transport de rejet respective, et sont, le long d'un deuxième chemin de transport, transportées depuis la zone du rack pour rejet (5) vers la zone du casier d'alimentation (20).

11. Procédé selon une des revendications précédentes, **caractérisé en ce que** l'équipement de transport de rejet (10) comporte ce qui suit :
- un premier équipement de transport (1), en particulier une première bande de transport qui transporte les unités de transport de rejet vides depuis la zone du casier d'alimentation vers la zone du rack pour rejet et
- un deuxième équipement de transport (2), en particulier une deuxième bande de transport, qui transporte les unités de transport de rejet chargées de documents de valeur de rejet depuis la zone du rack pour rejet vers la zone du casier d'alimentation, et
- un troisième équipement de transport (3), en particulier une troisième bande de transport, qui réceptionne au bout du deuxième équipement de transport les unités de transport de rejet chargées de documents de valeur de rejet et les transporte dans le casier d'alimentation et qui retire du casier d'alimentation les unités de transport de rejet vides et les transporte jusqu'au début du premier équipement de transport, et
- un quatrième équipement de transport (4), en particulier une quatrième bande de transport, qui réceptionne au bout du premier équipement de transport les unités de transport de rejet vides et les transporte dans le rack pour rejet et qui retire du rack pour rejet les unités de transport de rejet chargées de documents de valeur de rejet et les transporte jusqu'au début du deuxième équipement de transport.

12. Procédé selon une des revendications précédentes, **caractérisé en ce que** le dispositif de traitement de documents de valeur comporte deux racks pour rejet (5) qui sont alternativement utilisés pour la dépose de documents de valeur de rejet qui appartiennent à des piles de documents de valeur placées les unes après les autres dans le casier d'alimentation, en particulier à des piles d'entrée et/ou à des piles de rejet, et **en ce que** l'équipement de transport de rejet est commandé de telle façon que, à chaque instant du traitement des documents de valeur, au moins à un des racks pour rejet (5), une unité de transport de rejet (RT) est à disposition pour la dépose de documents de valeur de rejet.

13. Procédé selon une des revendications précédentes, **caractérisé en ce que** le dispositif de traitement de documents de valeur comporte au moins deux racks pour rejet (5) qui sont utilisés pour la dépose séparée de documents de valeur de rejet de différentes causes de rejet, et **en ce que**, lors du tri des documents de valeur, les documents de valeur de rejet de la pile respective de documents de valeur, en particulier de la pile d'entrée ou de la pile de rejet, sont répartis en une première et en une deuxième catégorie de rejet qui sont déposées dans différents des racks pour rejet, cependant que la première catégorie de rejet comprend les documents de valeur non reconnus lors de la vérification, , et que la deuxième catégorie de rejet comprend les documents de valeur suspects de contrefaçon.

14. Procédé selon la revendication 13, **caractérisé en ce que** les documents de valeur de rejet qui sont déposés dans une unité de transport de rejet (RT) dans un des racks pour rejet (5) et re-transportés au casier d'alimentation puis à nouveau placés dans le casier d'alimentation sont uniquement les documents de valeur de rejet de la première catégorie, et que les documents de valeur de rejet la deuxième catégorie sont déposés dans un autre rack pour rejet puis, à partir de là, transportés dans un réservoir intermédiaire (110) duquel ils peuvent être enlevés ultérieurement afin de vérifier à nouveau leur authenticité.

15. Dispositif (100) de traitement de documents de valeur, comportant
a) un casier d'alimentation (20) pour la réception d'une ou de plusieurs piles d'entrée de documents de valeur qui sont placés dans le casier d'alimentation,
b) un équipement de déliassage (27) pour le déliassage des documents de valeur depuis le casier d'alimentation,
c) au moins un capteur (30) pour la vérification des documents de valeur,
d) un système de transport (90) pour le transport des documents de valeur en fonction de résultats de la vérification et pour le triage des documents de valeur dans différents casiers de dépose du dispositif de traitement de documents de valeur,
e) un équipement de transport de rejet (10) pour le re-transport automatique de documents de valeur de rejet du rack pour rejet (5) au casier d'alimentation (20),
f) un équipement de commande (60) conçu pour commander de telle façon le dispositif et l'équipement de transport de rejet (10)
- que les documents de valeur de rejet sont déposés, de manière séparée des documents de valeur valide, dans un rack pour rejet (5),
- que les documents de valeur de rejet sont re-transportés du rack pour rejet au casier d'alimentation (20) et sont à nouveau placés dans le casier d'alimentation,
- que les documents de valeur de rejet à nouveau placés dans le casier d'alimentation (5) sont à nouveau vérifiés par le dispositif (100),
**caractérisé en ce que**
- l'équipement de transport de rejet (10) comporte plusieurs unités de transport de rejet (RT) qui comportent respectivement un identifiant (31) individuel lisible par machine,
- l'équipement de transport de rejet (10) comporte un lecteur (13) pour la lecture de l'identifiant (31) lisible par machine des unités de transport de rejet,
- l'équipement de commande (60) est conçu pour commander de telle façon l'équipement de transport de rejet
**que** les documents de valeur de rejet des différentes piles d'entrée (E) sont déposés, de manière séparée les uns des autres, dans différentes unités de transport de rejet (RT) et sont, dans les différentes unités de transport de rejet, re-transportés au casier d'alimentation (20) du dispositif de traitement de documents de valeur,
- un équipement d'évaluation (60) qui est conçu pour utiliser l'identifiant (31), lisible par machine, lu par le lecteur, de l'unité respective de transport de rejet, pour affecter les documents de valeur de rejet issus de l'unité respective de transport de rejet (RT) à la pile d'entrée (E) à laquelle appartiennent ces documents de valeur de rejet.
